# EUROPEAN PATENT SPECIFICATION

(11) **EP 3 761 136 B1**
(45) Date of publication and mention of the grant of the patent: **26.10.2022**
(21) Application number: 18908084.9
(22) Date of filing: 28.02.2018
(51) Int. Cl.: G05D 1/02, G01C 21/04

(54) **CONTROL DEVICE, MOBILE BODY, AND PROGRAM**
STEUERVORRICHTUNG, MOBILER KÖRPER UND PROGRAMM
DISPOSITIF DE COMMANDE, CORPS MOBILE ET PROGRAMME

(43) Date of publication of application: 06.01.2021
(73) Proprietor: HONDA MOTOR CO., LTD., Minato-ku Tokyo 107-8556 (JP)
(72) Inventor: MURO, Keiji, Wako-shi, Saitama 351-0193 (JP); KAMEYAMA, Naoki, Wako-shi, Saitama 351-0193 (JP); SHIMAMURA, Hideaki, Wako-shi, Saitama 351-0193 (JP); ONODERA, Satoshi, Tokyo 107-8556 (JP)
(74) Representative: Herzog, Markus
(86) International application number: PCT/JP2018/007665
(87) International publication number: WO 2019/167210

(56) References cited:
- EP-A1- 2 385 435
- WO-A1-2008/013355
- WO-A1-2013/069147
- WO-A1-2015/097905
- DE-A1- 4 138 270
- DE-A1-102010 033 479
- JP-A- 2004 280 451
- JP-A- 2007 322 138
- JP-A- 2007 322 138
- JP-A- 2008 087 102
- JP-A- 2008 087 102
- JP-A- 2008 158 905
- JP-A- 2011 065 308
- JP-A- 2017 531 423
- US-A1- 2004 156 541
- US-A1- 2014 031 980
- US-A1- 2017 315 558
- US-B1- 9 513 627

## Description

### BACKGROUND

### 1. TECHNICAL FIELD

The present invention relates to a control apparatus, a moving object, and a program.

### 2. RELATED ART

In recent years, working machinery has been developed which estimates a self-location using a GPS signal and autonomously travels inside a predetermined region. (For example, see Patent Literature 1 or 2).

### [Citation List]

### [Patent Literature]

[Patent Literature 1] JP 2016185099 A
[Patent Literature 2] JP 2013223531 A
[Patent Literature 3] US 2004/156541 A1
[Patent Literature 4] DE 10 2010 033479 A1
[Patent Literature 5] US 2017/315558 A1
[Patent Literature 6] JP 2007 322138 A
[Patent Literature 7] US 2014/031980 A1
[Patent Literature 8] EP 2 385 435 A1

Patent Literature 3 discloses a location mark detecting method of a robot cleaner capable of accurately detecting location marks from an image captured by an upwardly looking camera. The location mark detecting method comprises the steps of obtaining from the image object marks to be compared with the reference location marks, determining whether shapes of the object marks are identical to those of the reference location marks, determining whether a distance separating the object marks is identical to that between the reference location marks if it is determined that the shapes are identical, determining whether a surrounding image of the object marks is identical to that of the reference location marks if it is determined that the distances are identical, and identifying the object marks as the location marks if it is determined that the surrounding images are identical. A robot cleaner capable of wirelessly communicating with an external device comprises a driving unit, an upwardly-looking camera for capturing an image of a ceiling above an area to be cleaned on which location marks are disposed, and a control unit for detecting the location marks from the image captured by the upwardly-looking camera, the control unit commanding the driving unit utilizing information of the current location to perform a work command.

Patent Literature 4 discloses a method which involves detecting current observation data in various acquisition directions (6-8) of sensors (4) in mobile object (1), and storing the detected data with acquisition directions. The detected data are compared with preset observation data from preset environment model. A record of preset environment model data is assigned to respective detected data having large probability of correspondence with preset data. The location of mobile object in environment (2) is determined using positional information of assigned preset model data and acquisition directions. An independent claim is included for mobile object.

Patent Literature 5 discloses a system and method for navigation correction assistance. The method provides a vehicle with a camera and an autonomous navigation system comprising a navigation buoy database and a navigation application. The navigation application visually acquires a first navigation buoy with an identity marker and accesses the navigation buoy database, which cross-references the first navigation buoy identity marker to a first spatial position. A first direction marker on the first navigation buoy is also visually acquired. In response to visually acquiring the first direction marker, a first angle is deter pined between the camera and the first spatial position. A first distance may also be determined between the vehicle and the first navigation buoy using visual methods or auxiliary position or distance measurement devices. Then, in response to the first spatial position, the first angle, and the first distance, the spatial position of the vehicle can be calculated using trigonometry.

Patent Literature 6 discloses the robot 1 which inputs an image data with an object existing within a working environment imaged by a camera part 101, and inputs a range data obtained by measuring a distance up to the object existing within the working environment by a laser range finder 107. (i) A reprojection error calculating part 103 calculates a reprojection error between a position on an image of a landmark detected from the image data, and a position reprojected with a position of the landmark in the working environment contained in map information stored in a storage part 106 onto the image data, and (ii) a position error calculating part 108 calculates an alignment error between the range data and a shape data contained in the map information. An optimizing part 109 further determines an objective function containing the reprojection error and the alignment error in response to a peripheral environment of the robot 1, and optimizes the determined objective function to calculate the own position of the robot 1.

Patent Literature 7 discloses a method for localizing a mobile robot in an unknown environment from continuous signals such as WiFi or active beacons. Disclosed is a technique for localizing a robot in relatively large and/or disparate areas. This is achieved by using and managing more signal sources for covering the larger area. One feature analyzes the complexity of Vector Field SLAM with respect to area size and number of signals and then describe an approximation that decouples the localization map in order to keep memory and run-time requirements low. A tracking method for re-localizing the robot in the areas already mapped is also disclosed. This allows to resume the robot after is has been paused or kidnapped, such as picked up and moved by a user. Embodiments of the invention can comprise commercial low-cost products including robots for the autonomous cleaning of floors.

Patent Literature 8 discloses a computer-implemented method of moving a carrier within a facility wherein products are stored at product locations (24), including the steps of gathering position data relative to the product locations and physical location data of data gathering positions. Also product location data and data relating to physical features of the facility are gathered. Gathered data are stored and used to generate layout data and to calculate a route profile based on layout data. The route profile is transferred to an automated guided vehicle. A system comprises a movable support with a monitoring device and a plurality of sensors capable of gathering physical location data and product location data. The sensors are operatively connected to a first processor. A second processor correlates different data to generate a layout of the facility and develops a plan for movement of the automated guided vehicle.

### [Technical Problem]

However, in a case where a location of working machinery is estimated using a GPS signal received by the working machinery it is difficult for the working machinery to move precisely in a location where a reception environment of the GPS signal is unsatisfactory. In addition, in a case where the location of the working machinery is estimated using an output of an internal sensor mounted to the working machinery, a positioning error becomes higher as a distance from a reference location is longer.

### [General Disclosure]

According to a first aspect of the present invention, a control apparatus is provided. The above-described control apparatus controls, for example, a moving object having an autonomous movement function. The above-described moving object includes, for example, at least one of (i) an image capturing section configured to capture an image of at least one of one or more landmarks disposed in a predetermined location, and (ii) a reception section configured to receive a signal from at least one of one or more transmitters disposed in a predetermined location except for a transmitter disposed in a positioning satellite. The above-described control apparatus includes, for example, an information obtaining section configured to obtain information related to at least one of the image captured by the image capturing section and the signal received by the reception section. The above-described control apparatus includes, for example, a location estimation section configured to analyze at least one of the image captured by the image capturing section and the signal received by the reception section, and estimate a location of the moving object.

In the above-described control apparatus, the location estimation section includes, for example, at least one of (a) a first estimation section configured to calculate a relative locational relationship between at least two landmarks included in the image captured by the image capturing section and the moving object, and estimate the location of the moving object based on the relative locational relationship, (b) a second estimation section configured to calculate a relative locational relationship between at least two parts of a single landmark included in the image captured by the image capturing section and the moving object, and estimate the location of the moving object based on the relative locational relationship, (c) a third estimation section configured to calculate a relative locational relationship between at least two transmitters that have respectively output at least two signals received by the reception section and the moving object, and estimate the location of the moving object based on the relative locational relationship, (d) a fourth estimation section configured to calculate a relative locational relationship between a single transmitter that has output at least two signals received by the reception section and the moving object, and estimate the location of the moving object based on the relative locational relationship, and (e) a fifth estimation section configured to calculate (i) a relative locational relationship between at least one landmark included in the image captured by the image capturing section and the moving object, and (ii) a relative locational relationship between at least one of transmitters that have respectively output at least one of signals received by the reception section and the moving object, and estimate the location of the moving object based on the relative locational relationships.

The above-described control apparatus may further include a sensor control section configured to control at least one of the image capturing section and the reception section. In the above-described control apparatus, the sensor control section (i) may control the image capturing section such that a particular landmark among the one or more landmarks is included in an angle of view even when the moving object moves. In the above-described control apparatus, the sensor control section (ii) may control the reception section such that a signal from a particular transmitter among the one or more transmitters is received even when the moving object moves.

In the above-described control apparatus, the sensor control section (i) may set, in a case where two or more landmarks are included in the image captured by the image capturing section, one of the two or more landmarks as the particular landmark. In addition, in the above-described control apparatus, the sensor control section (ii) may set, in a case where the reception section receives signals from two or more transmitters, one of the two or more transmitters as the particular transmitter.

In the above-described control apparatus, the sensor control section (i) may set, in a case where at least one of a location and a size of the particular landmark in the image captured by the image capturing section satisfies a predetermined condition, another landmark included in the image as the particular landmark for a next time. In addition, in the above-described control apparatus, the sensor control section (ii) may set, in a case where an intensity of a signal from the particular transmitter satisfies a predetermined condition, another transmitter a signal of which is received by the reception section as the particular landmark for a next time.

The above-described control apparatus may include a movement control section configured to control movement of the moving object. The above-described control apparatus may include may include a movement history storage section configured to store information indicating a movement history of the moving object. In the above-described control apparatus, the location estimation section may have a recognition section configured to analyze the image captured by the image capturing section and the signal received by the reception section, and recognize a landmark, a part of the landmark, or a transmitter existing in a surrounding of the moving object. In the above-described control apparatus, in a case where the number of landmarks, parts of the landmark, or transmitters recognized by the recognition section is lower than a predetermined value, the movement control section may refer to the information stored in the movement history storage section, and control the movement of the moving object such that the moving object progresses in a reverse direction of a track of the moving object based on the immediately preceding movement history of the moving object.

The above-described control apparatus may include a movement control section configured to control movement of the moving object. In the above-described control apparatus, the location estimation section may have a recognition section configured to analyze the image captured by the image capturing section and the signal received by the reception section, and recognize a landmark, a part of the landmark, or a transmitter existing in a surrounding of the moving object. In the above-described control apparatus, the location estimation section may have a sixth estimation section configured to calculate a relative locational relationship between a particular reference location and the moving object based on a control amount of a drive section of the moving object, and estimate the location of the moving object based on the relative locational relationship. In the above-described control apparatus, in a case where the number of landmarks, parts of the landmark, or transmitters recognized by the recognition section is lower than a predetermined value, the movement control section may control the movement of the moving object based on the location of the moving object estimated by the sixth estimation section until the number of landmarks, parts of the landmark, or transmitters recognized by the recognition section becomes equal to the predetermined value or becomes higher than the predetermined value.

The above-described control apparatus may include an operation mode control section configured to control an operation mode of the moving object. In the above-described control apparatus, (i) in a case where a predetermined period of time elapses after the number of landmarks, parts of the landmark, or transmitters recognized by the recognition section becomes lower than the predetermined value, or (ii) in a case where a movement distance of the moving object satisfies a predetermined condition after the number of landmarks, parts of the landmark, or transmitters recognized by the recognition section becomes lower than the predetermined value, the operation mode control section may set the operation mode of the moving object as a predetermined operation mode.

According to a second aspect of the present invention, a program is provided. The above-described program is, for example, a program for causing a computer to function as the above-described control apparatus. The above-described program is, for example, a program for causing the computer to execute a control method of controlling a moving object having an autonomous movement function.

In the above-described control method, the above-described moving object includes, for example, at least one of (i) an image capturing section configured to capture an image of at least one of one or more landmarks disposed in a predetermined location, and (ii) a reception section configured to receive a signal from at least one of one or more transmitters disposed in a predetermined location except for a transmitter disposed in a positioning satellite. The above-described control method has, for example, an information obtaining step of obtaining information related to at least one of the image captured by the image capturing section and the signal received by the reception section. The above-described control method has, for example, a location estimation step of analyzing at least one of the image captured by the image capturing section and the signal received by the reception section, and estimating a location of the moving object.

In the above-described control method, the location estimation step includes, for example, at least one of (a) a first estimation step of calculating a relative locational relationship between at least two landmarks included in the image captured by the image capturing section and the moving object, and estimating the location of the moving object based on the relative locational relationship, (b) a second estimation step of calculating a relative locational relationship between at least two parts of a single landmark included in the image captured by the image capturing section and the moving object, and estimating the location of the moving object based on the relative locational relationship, (c) a third estimation step of calculating a relative locational relationship between at least two transmitters that have respectively output at least two signals received by the reception section and the moving object, and estimating the location of the moving object based on the relative locational relationship, (d) a fourth estimation step of calculating a relative locational relationship between a single transmitter that has output at least two signals received by the reception section and the moving object, and estimating the location of the moving object based on the relative locational relationship, and (e) a fifth estimation step of calculating (i) a relative locational relationship between at least one landmark included in the image captured by the image capturing section and the moving object, and (ii) a relative locational relationship between at least one of transmitters that have respectively output at least one of signals received by the reception section and the moving object, and estimating the location of the moving object based on the relative locational relationships.

A computer readable medium that stores the above-described program may also be provided. The computer readable medium may also be a non-transitory computer readable medium. The computer readable medium may also be a computer readable recording medium.

According to a third aspect of the present invention, a moving object that autonomously moves is provided. The above-described moving object includes, for example, the above-described control apparatus. The above-described moving object includes, for example, at least one of an image capturing section and a reception section.

In the above-described moving object, the image capturing section (i) may have a plurality of image capturing devices configured to capture images in different directions. In the above-described moving object, the image capturing section (ii) may be supported to a rotatable supporting portion. In the above-described moving object, the image capturing section (iii) may capture an image of an object via an optical system including at least partially including a member configured to be rotatable.

In the above-described moving object, the reception section (i) may have a plurality of reception devices, each of the reception devices having directivity and being disposed such that a signal from a different direction is received. In the above-described moving object, the reception section (ii) may be supported to a rotatable supporting portion. In the above-described moving object, the reception section (iii) may receive the signal via a waveguide section at least partially including a member configured to be rotatable.

The summary clause does not necessarily describe all necessary features of the embodiments of the present invention. The present invention may also be a subcombination of the features described above.

### BRIEF DESCRIPTION OF THE DRAWINGS

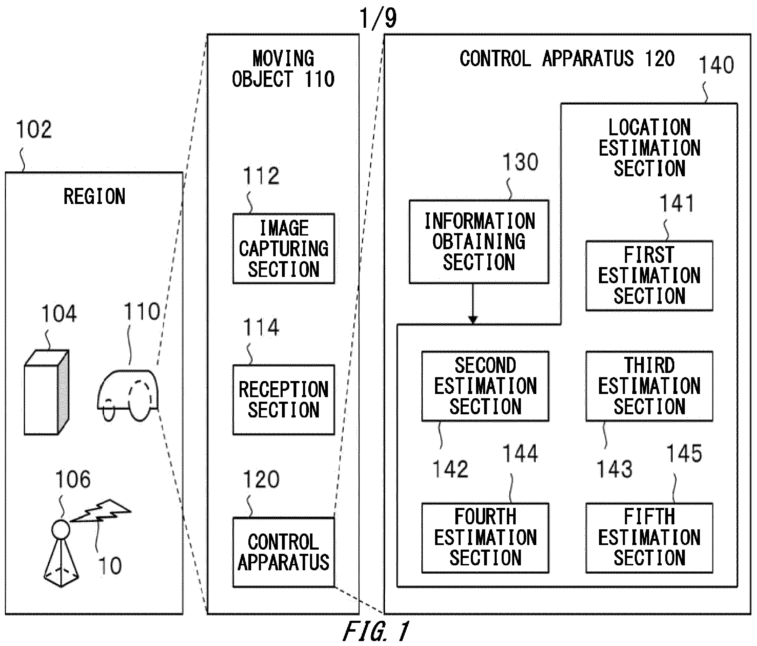

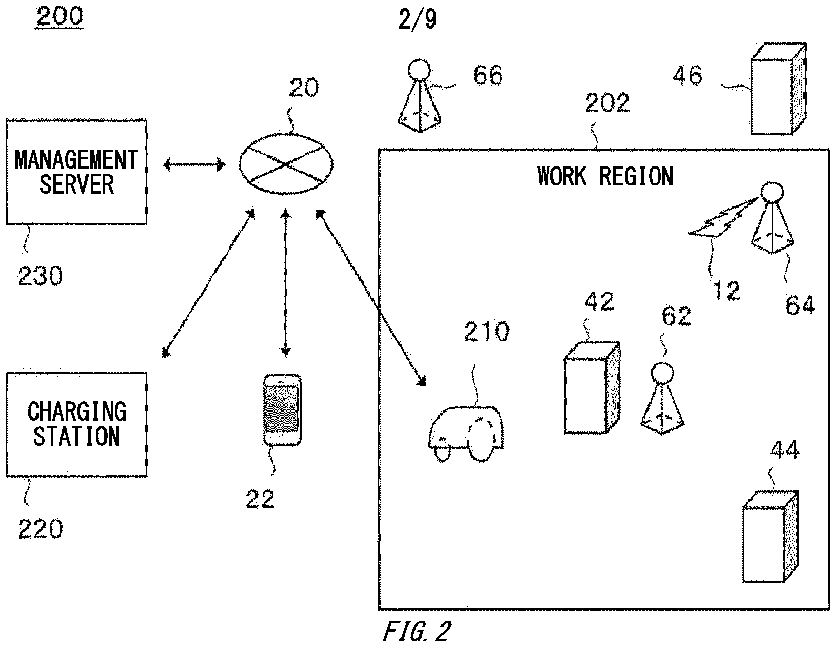

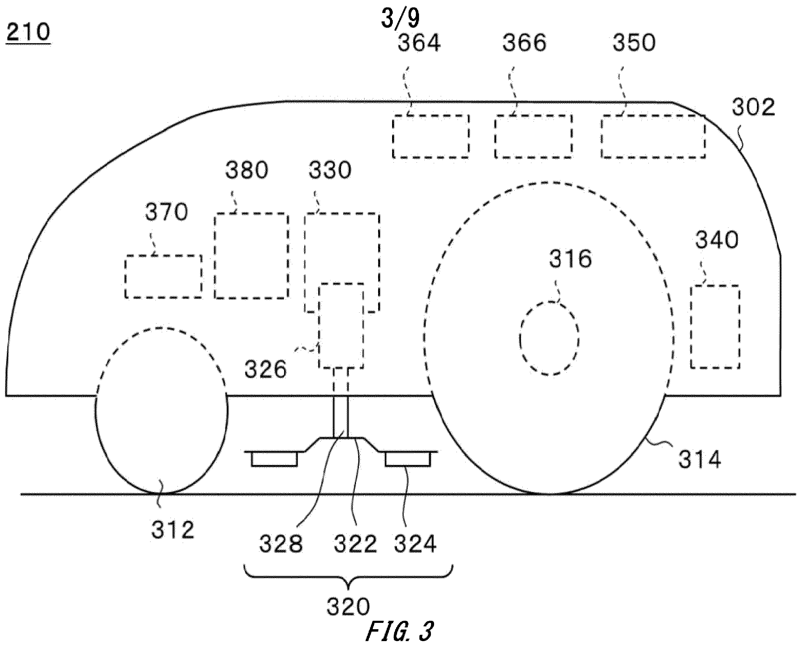

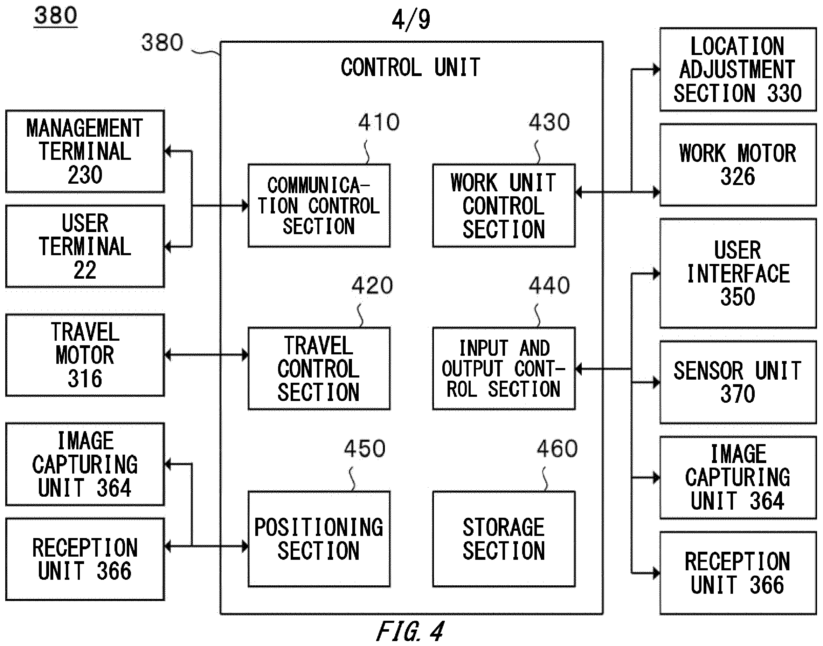

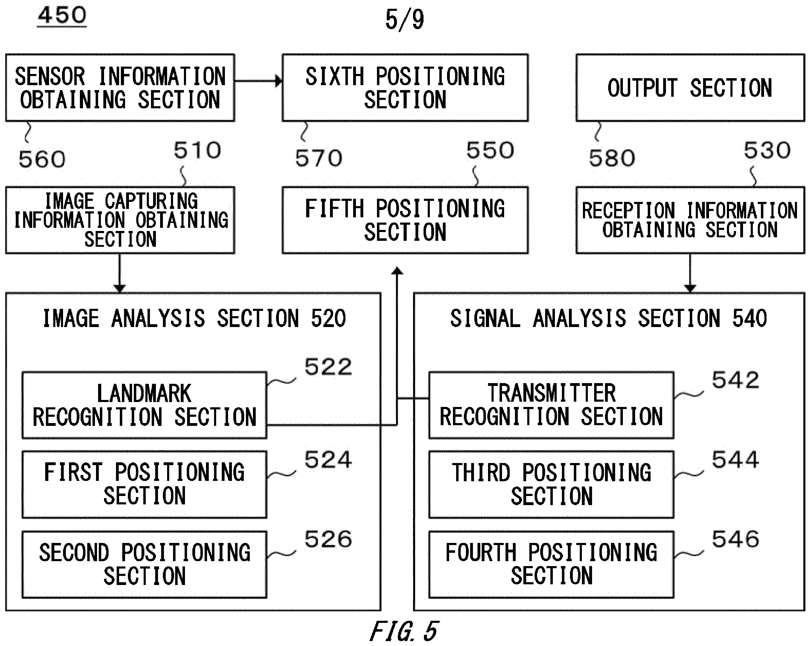

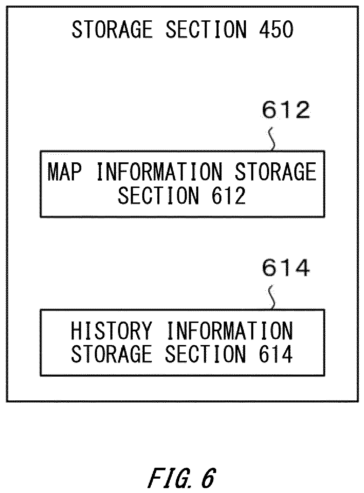

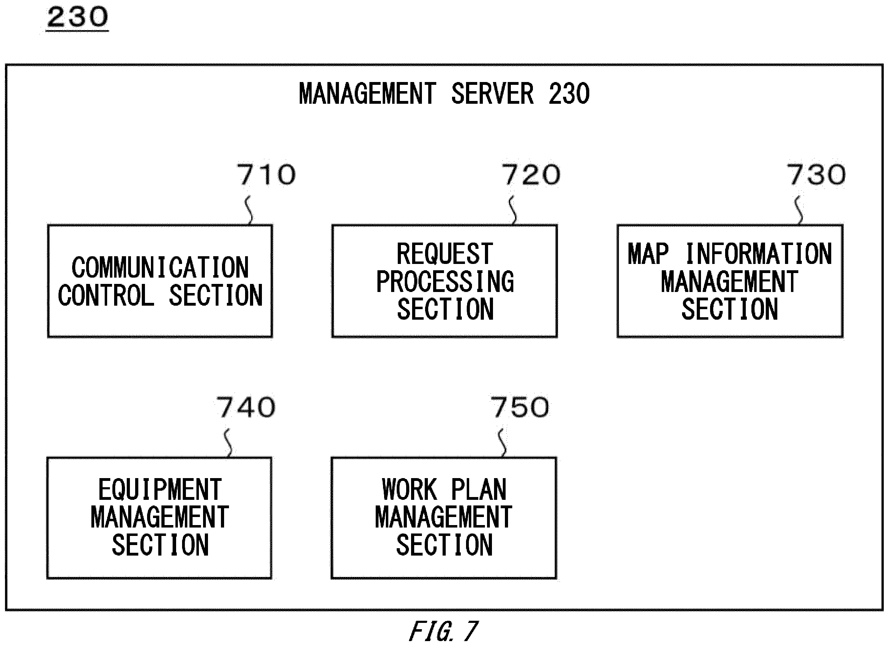

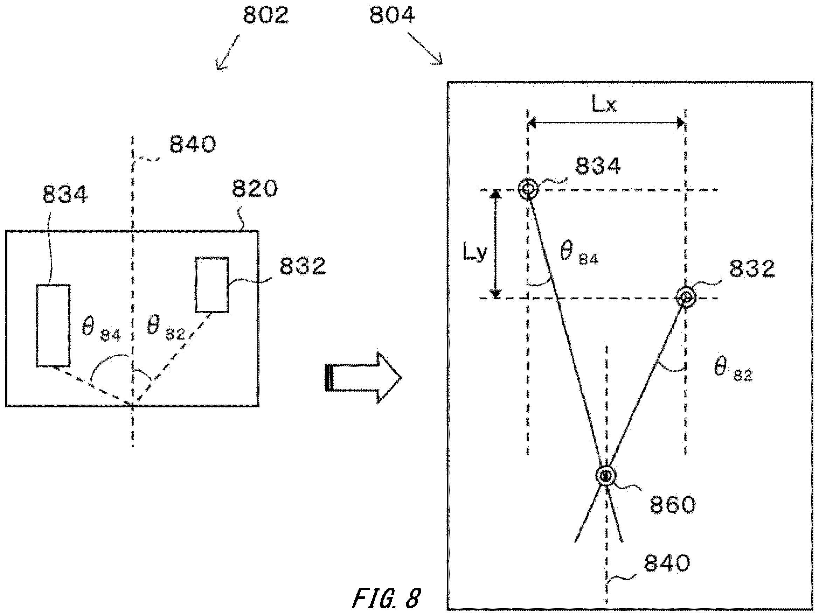

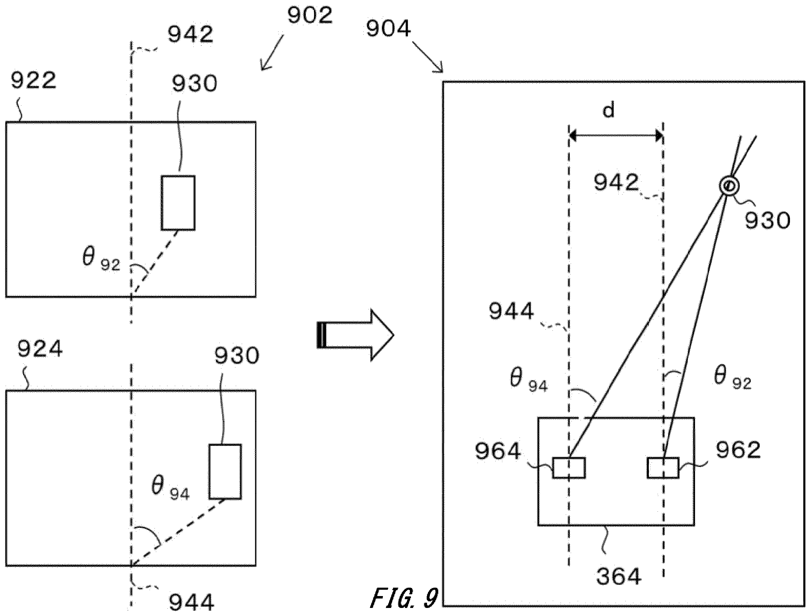

FIG. 1 schematically illustrates one example of an internal configuration of a moving object 110. FIG. 2 schematically illustrates one example of a system configuration of a management system 200. FIG. 3 schematically illustrates one example of an internal configuration of a lawn mower 210. FIG. 4 schematically illustrates one example of an internal configuration of a control unit 380. FIG. 5 schematically illustrates one example of an internal configuration of a positioning section 450. FIG. 6 schematically illustrates one example of an internal configuration of a storage section 460. FIG. 7 schematically illustrates one example of an internal configuration of a management server 230. FIG. 8 illustrates a single image in which two landmarks are captured. FIG. 9 illustrates two images in which the same landmark is captured.

### DESCRIPTION OF EXEMPLARY EMBODIMENTS

Hereinafter, the present invention will be described by way of exemplary embodiments of the invention, but the following embodiments are not intended to restrict the invention according to the claims. In addition, not all combinations of features described in the embodiments necessarily have to be essential to solving means of the invention. It is noted that in the drawings, the same or similar parts are assigned with the same reference signs, and redundant descriptions may be omitted in some cases. In addition, as long as a technically significant contradiction is not made, two or more elements that have the same name and are assigned with different reference signs may respectively have mutually similar configurations.

### [Outline of moving object 110]

FIG. 1 schematically illustrates one example of an internal configuration of one embodiment of a moving object 110. According to the present embodiment, the moving object 110 includes, for example, at least one of an image capturing section 112 and a reception section 114. The moving object 110 may also include a plurality of the image capturing sections 112. The moving object 110 may also include a plurality of the reception sections 114. According to the present embodiment, the moving object 110 may also include a control apparatus 120. According to the present embodiment, the control apparatus 120 includes, for example, an information obtaining section 130. The control apparatus 120 may also include a location estimation section 140. According to the present embodiment, the location estimation section 140 may also have at least one of a first estimation section 141, a second estimation section 142, a third estimation section 143, a fourth estimation section 144, and a fifth estimation section 145.

According to the present embodiment, the moving object 110 has an autonomous movement function. For example, the moving object 110 recognizes a self-location inside a region 102, and autonomously moves inside the region 102. The moving object 110 may also be a moving object that travels on the land, may also be a moving object that flies in the air, or may also be a moving object that navigates under the water or on the water. It is noted that a location and a range of the region 102 are not particularly limited. The range of the region may represent a size and a shape of the region. The region 102 may have any geographical range. The region 102 may have a predetermined geographical range.

According to the present embodiment, the image capturing section 112 captures at least one of one or more landmarks 104 disposed in a predetermined location. The image capturing section 112 may adjust an angle of view such that at least one of the one or more landmarks 104 serves as an object of a single image.

The image capturing section 112 may transmit data of the captured image to the control apparatus 120. The image capturing section 112 may also transmit information indicating an image capturing condition of the captured image to the control apparatus 120. As the image capturing condition, a zoom magnification, an aperture, whether an optical filter exists or whether an optical filter is needed, a type of an optical filter, a resolution, a shatter speed, a frame rate, a capturing altitude, an angle of view, a focal length, render settings, and the like are exemplified. The image capturing condition may also include information indicating a meteorological condition at the time of the image capturing.

According to one embodiment, the image capturing section 112 (i) may also have a single image capturing device, or (ii) may also have a plurality of image capturing devices. The image capturing section 112 may have a plurality of image capturing devices configured to generate a stereo image. The image capturing section 112 may also be a twin-lens or multiple-lens stereo camera. It is noted that a stereo image may also be captured by two or three or more of the image capturing sections 112 operating in cooperation. The image capturing section 112 may have a plurality of image capturing devices configured to be able to capture images in mutually different directions. The image capturing section 112 may also be a 180-degree camera, or may also be a 360-degree camera. The image capturing section 112 may also obtain a still image of an object, or may also obtain a video image of an object.

According to another embodiment, at least one of the one or the plurality of the image capturing sections 112 may also be supported to a rotatable supporting portion. Thus, for example, when a computer mounted to the moving object 110 controls rotation of the supporting portion, an image capturing direction of at least one of the one or the plurality of the image capturing sections 112 is controlled. It is noted that the other image capturing section 112 may be fixed to the moving object 110.

According to still another embodiment embodiment, at least one of the one or the plurality of the image capturing sections 112 may be configured to capture an image of an object via an optical system at least partially including a member configured to be rotatable. As the member configured to be rotatable, one or more lens members, one or more reflection members, and a combination of these are exemplified. Thus, for example, when the computer mounted to the moving object 110 controls the rotation of at least a part of the members of the optical system, the image capturing direction of at least one of the one or the plurality of the image capturing sections 112 is controlled.

According to these embodiments, information indicating the image capturing direction of the image capturing section 112 may also be transmitted to the control apparatus 120. As the information indicating the image capturing direction of the image capturing section 112, (i) information indicating a degree of an angle defined by a reference direction set in the moving object 110 and an optical axis of the optical system of the image capturing section 112, (ii) information indicating an angle of orientation of the optical axis of the optical system of the image capturing section 112, and the like are exemplified. The information indicating the image capturing direction of the image capturing section 112 may also be two-dimensional information or may also be three-dimensional information. For example, the information indicating the image capturing direction of the image capturing section 112 includes information indicating an angle of elevation of the optical axis of the optical system of the image capturing section 112.

The landmark 104 may also be disposed inside the region 102, or may also be disposed outside the region 102. The landmark 104 may also be disposed in the vicinity of a boundary of the region 102, or may also be disposed in the vicinity of a center or a center of gravity of the region 102.

It is sufficient when a location of the landmark 104 on at least a two-dimensional plane (for example, a horizontal plane) at, at least, a specific time is already known, and a shape, a size, and whether the movement is possible are not particularly limited. The landmark 104 may also be disposed on the ground, or may also be disposed in the air. The location of the landmark 104 may be also specified on two-dimensional coordinates, or may be also specified on three-dimensional coordinates.

The landmark 104 may also be a natural structure, or may also be an artificial structure. As the natural structure, a rock, a tree, a cliff, and the like are exemplified. As the artificial structure, a building, a sculpture, a wall, a fence, and the like are exemplified. The landmark 104 may also be a mark or pattern disposed in a part of the natural or artificial structure. The above-described mark or pattern may also be a natural mark or pattern, or may also be an artificial mark or pattern. An entire shape of the natural or artificial structure and a size thereof may also be used to perform the positioning, or a shape and a size of the mark or pattern disposed in a part of the natural or artificial structure may also be used to perform the positioning.

It is noted that the above-described mark or pattern is not limited to a tangible entity. The above-described mark or pattern may also be an intangible entity that may be captured by the image capturing section 112. In this case, the above-described mark or pattern may also be represented by (i) a still image or a video image displayed on a light emitting apparatus such as a display, a projector, or an LED light, or may also be represented by (ii) flashing of light emitted by the above-described light emitting apparatus, an intensity of the light, a fluctuation of the intensity of the light, a wavelength of the light, a fluctuation of the wavelength of the light, and the like. The above-described mark may also be a flashing pattern of the light, a fluctuation pattern of the intensity of the light, a fluctuation pattern of the wavelength of the light, or a combination of these. It is noted that in a case where the landmark 104 is an intangible entity, the appearance of the landmark 104 may be described as "the landmark 104 being disposed" in some cases.

In addition, in this case, the landmark 104 may be one example of an optical signal. The optical signal may include identification information for identifying the landmark 104. The optical signal may also further include at least one of (i) location information indicating a location where the landmark 104 is emitted, and (ii) orientation information indicating an emission orientation of the optical signal. In addition, an optical signal transmitter configured to emit the above-described optical signal may also be an example of a transmitter 106.

In the natural or artificial structure, the single landmark 104 may also be disposed, or a plurality of the landmarks 104 may also be disposed. In the natural or artificial structure, two of the landmarks 104 may also be disposed, at least three of the landmarks 104 may also be disposed, at least four of the landmarks 104 may also be disposed, at least six of the landmarks 104 may also be disposed, or at least eight of the landmarks 104 may also be disposed.

In the natural or artificial structure, a single type of the landmark 104 may also be disposed, or a plurality of types of the landmarks 104 may also be disposed. In the natural or artificial structure, two types of the landmarks 104 may also be disposed, at least three types of the landmarks 104 may also be disposed, at least four types of the landmarks 104 may also be disposed, at least six types of the landmarks 104 may also be disposed, or at least eight types of the landmarks 104 may also be disposed. The types of the landmark 104 may be classified in terms of at least one of a size, a shape, a pattern, and a color.

An external shape of the natural or artificial structure may have a plurality of faces. For example, the landmarks 104 of mutually different types are disposed on a first face and a second face among the plurality of faces. An orientation indicated by a normal vector of the first face and an orientation indicated by a normal vector of the second face may be different from each other. An orientation indicated by a normal vector of a particular face may be an orientation indicated by a vector obtained by projecting the normal vector on the horizontal plane. For example, the first landmark 104 is disposed on a face on the north side of the above-described structure, and the second landmark 104 having a type different from the first landmark 104 is disposed on a face on the south side of the structure.

Similarly, the landmarks 104 having mutually different types may also be disposed on each of three or more faces of the natural or artificial structure. Orientations indicated by respective normal vectors of the above-described three or more faces may be different from one another. Thus, for example, the control apparatus 120 can estimate the location of the moving object 110 with a small amount of calculation. In addition, the location estimation precision of the moving object 110 can be improved.

In the natural or artificial structure, the landmark 104 or the light emitting apparatus that causes the landmark 104 to appear may also be supported to a rotatable supporting member. Thus, for example, the control apparatus 120 can estimate the location of the moving object 110 with the small amount of calculation. In addition, the location estimation precision of the moving object 110 can be improved.

An image capturing restriction member that restricts a geographical range where an image of the landmark 104 may be captured may also be disposed in the natural or artificial structure. Thus, the landmark 104 can be applied with directivity. For example, a shielding member that is disposed in a surrounding of the landmark 104 and shields the landmark 104 from the image capturing section 112 is disposed in the natural or artificial structure. The shielding member may also be a plate-like member, may also be a tubular member, or may also be a columnar member.

It is possible to adjust a geographical range where an image of the landmark 104 may be captured by adjusting at least one of an installment location of the shielding member, a relative location of the landmark 104, and a height of the shielding member. For example, when a partition-like shielding member is arranged such that a part of the landmark 104 is covered, a lawn mower 210 does not recognize the landmark from a side where the partition-like shielding member is arranged. Thus, for example, the control apparatus 120 can estimate the location of the moving object 110 with the small amount of calculation. In addition, the location estimation precision of the moving object 110 can be improved.

According to the present embodiment, the reception section 114 receives a signal 10 from at least one of one or more the transmitters 106 disposed in a predetermined location. The reception section 114 may also measure a reception intensity of the signal 10.

The reception section 114 may transmit the received signal to the control apparatus 120. The reception section 114 may also transmit the data conveyed by the signal 10 to the control apparatus 120. The reception section 114 may also transmit information indicating a reception condition of the signal 10 to the control apparatus 120. As the reception condition, information indicating a meteorological condition at the time of the reception, and the like are exemplified.

According to one embodiment, the reception section 114 (i) may also have a single reception device, or (ii) may also have a plurality of reception devices. In a case where the reception section 114 has a plurality of reception devices, the plurality of reception devices may also be configured to receive signals from mutually different directions. The above-described reception devices may have directivity. The reception section 114 may also have a receiver based on a phased array system which is constituted by a plurality of reception devices. As the reception device, a microphone, an antenna, and the like are exemplified.

According to another embodiment, at least one of the one or the plurality of reception sections 114 may also be supported to a rotatable supporting portion. Thus, for example, when the computer mounted to the moving object 110 controls the rotation of the supporting portion, the reception direction of at least one of the one or the plurality of reception sections 114 is controlled. It is noted that the other reception section 114 may also be fixed to the moving object 110.

According to still another embodiment embodiment, at least one of the one or the plurality of reception sections 114 may be configured to receive the signal 10 via a waveguide section at least partially including a member configured to be rotatable. As the member configured to be rotatable, one or more reflection members that reflect an acoustic wave, a radio wave, and the like, and a combination of these are exemplified. Thus, for example, when the computer mounted to the moving object 110 controls the rotation of at least a part of members of the waveguide section, the reception direction of at least one of the one or the plurality of reception sections 114 is controlled.

According to these embodiments, information indicating a reception direction of the signal 10 may also be transmitted to the control apparatus 120. The reception direction of the signal 10 may be decided based on the reception intensity of the signal 10. For example, a direction in which the reception intensity of the signal 10 satisfies a predetermined condition is decided as the reception direction of the signal 10. As the predetermined condition, (i) a condition where the reception intensity of the signal 10 is equal to or higher than a predetermined threshold, (ii) a condition where the reception intensity of the signal 10 is higher than the predetermined threshold, (iii) a condition where the reception intensity of the signal 10 shows a peak, and the like are exemplified.

As the information indicating the reception direction of the signal 10, (i) information indicating a range of a degree of an angle defined by a reference direction set in the moving object 110 and a direction in which the reception intensity of the signal 10 satisfies a predetermined condition, (ii) information indicating a range of a degree of an angle of orientation in a direction in which the reception intensity of the signal 10 satisfies the predetermined condition, and the like are exemplified. The information indicating the reception direction of the signal 10 may also include information indicating a direction in which the reception intensity of the signal 10 is the highest. The information indicating the reception direction of the signal 10 may also be two-dimensional information, or may also be three-dimensional information.

As the signal 10, various types of signals used to perform the positioning except for the GPS signal (which may be referred to as positioning signals in some cases) are exemplified. Thus, the positioning information using the GPS signal can be complemented by positioning information using the signal 10, or the positioning information using the signal 10 can be complemented by the positioning information using the GPS signal. As a result, for example, even in a case where the positioning precision of the positioning information using the GPS signal is low, it is possible to more precisely estimate the location of the moving object 110.

As a transmission medium of the signal 10, light, a radio wave, an acoustic wave, an ultrasonic wave, and the like are exemplified. The signal 10 may also be a beacon signal, a radio signal for a wireless communication, and the like. The signal 10 may include identification information for identifying the transmitter 106 that has emitted the signal 10. The signal 10 may also further include at least one of (i) location information indicating a location of the transmitter 106 that has emitted the signal 10, and (ii) orientation information indicating the emission orientation of the signal 10. The orientation information (i) may also be information indicating an angle of orientation in the emission direction of the signal 10, or (ii) may also be information indicating a degree of an angle defined by the reference direction set in the transmitter 106 and the emission direction of the signal 10.

According to the present embodiment, the transmitter 106 emits the signal 10. It is preferable that the transmitter 106 is not a transmitter disposed in a positioning satellite. The transmitter 106 may also be disposed inside the region 102, or may also be disposed outside the region 102. The transmitter 106 may also be disposed in the vicinity of the boundary of the region 102, or may also be disposed in the vicinity of the center or the center of gravity of the region 102.

When the location of the transmitter 106 on at least the two-dimensional plane (for example, the horizontal plane) at, at least, a particular time is already known, an arrangement location of the transmitter 106 is not particularly limited. The transmitter 106 may also be disposed on the ground, or may also be disposed in the air. The location of the transmitter 106 may also be specified on the two-dimensional coordinates, or may also be specified on the three-dimensional coordinates.

The transmitter 106 may also emit the signal 10 having the directivity, or may also emit the non-directional signal 10. The single transmitter 106 may also emit a single signal 10, or may also emit a plurality of signals 10. The single transmitter 106 may also emit a plurality of signals 10 at the same time, or may also emit a plurality of signals 10 in sequence. The single transmitter 106 may also emit a plurality of signals 10 in substantially the same direction or orientation, or may also emit a plurality of signals 10 in different directions or orientations.

A state where directions or orientations of two signals are substantially the same includes not only a case where the directions or orientations in which the output intensities of the two signals become the maximum are matched with each other, but also a case where an overlapping degree of angles of range of directivity with regard to the two signals satisfies a predetermined condition.

The single transmitter 106 may also emit a single type of the signal 10, and may also emit a plurality of types of the signals 10. The single transmitter 106 may also emit a plurality of types of the signals 10 at the same time, or may also emit a plurality of types of the signals 10 in succession. The single transmitter 106 may also emit a plurality of types of the signals 10 in substantially the same direction or orientation, or may also emit a plurality of types of the signals 10 in different directions or orientations. A type of the signal 10 may be classified in terms of at least one of a frequency of the signal 10, and information indicated by data conveyed by the signal 10.

The transmitter 106 may also be supported to a rotatable supporting member. The transmitter 106 may also emit the signal 10 via a waveguide member at least partially including a member configured to be rotatable. The transmitter 106 may also continuously emit the signals 10, or may also intermittently emit the signals 10. The transmitter 106 may also store an emission time of the signal 10. The transmitter 106 may also store (i) the emission time of the signal 10, and (ii) at least one of the emission direction of the signal 10 and the type of the signal 10 while being associated with each other.

According to the present embodiment, the control apparatus 120 controls the moving object 110. According to the present embodiment, a detail of the control apparatus 120 will be described while a case where the control apparatus 120 is disposed in the moving object 110 is used as an example. However, the control apparatus 120 is not limited to the present embodiment. According to another embodiment, at least a part of elements of the control apparatus 120 may be disposed in an external information processing apparatus that can transmit and receive information with the moving object 110 via a communication network. In addition, at least a part of functions of the control apparatus 120 may also be realized by the above-described external information processing apparatus.

According to the present embodiment, the information obtaining section 130 obtains information related to at least one of the image captured by the image capturing section 112 and the signal 10 received by the reception section 114. The information obtaining section 130 may transmit the obtained information to the location estimation section 140.

According to the present embodiment, the location estimation section 140 analyzes at least one of the image captured by the image capturing section 112 and the signal 10 received by the reception section 114, and estimates the location of the moving object 110. According to the present embodiment, the location estimation section 140 receives the information obtained by the information obtaining section 130 as an input, and outputs information of an estimated location of the moving object 110.

The location estimation section 140 may also output information indicating positioning precision of the location of the moving object 110. The location estimation section 140 may also output information indicating that a defect occurs in at least a part of the landmark 104, the transmitter 106, the image capturing section 112, and the reception section 114. The location estimation section 140 may also output information indicating the number of landmarks 104 recognized by the location estimation section 140. The location estimation section 140 may also output information indicating the number of transmitters 106 recognized by the location estimation section 140. The information indicating the above-described number may be the identification information of the landmark 104 or the transmitter 106 recognized by the location estimation section 140.

According to the present embodiment, the first estimation section 141 calculates a relative locational relationship between at least two of the landmarks 104 included in the image captured by the image capturing section 112 and the moving object 110. The first estimation section 141 may estimate the location of the moving object 110 based on the above-described locational relationship.

According to the present embodiment, the second estimation section 142 calculates a relative locational relationship between at least two parts of the single landmark 104 included in the image captured by the image capturing section 112 and the moving object 110. The second estimation section 142 may estimate the location of the moving object 110 based on the above-described locational relationship.

According to the present embodiment, the third estimation section 143 calculates a relative locational relationship between at least two of the transmitters 106 that have respectively output at least two of the signals 10 received by the reception section 114 and the moving object 110. The third estimation section 143 may estimate the location of the moving object 110 based on the above-described locational relationship.

According to the present embodiment, the fourth estimation section 144 calculates a relative locational relationship between the single transmitter 106 that has outputted at least two of the signals 10 received by the reception section 114 and the moving object 110. The fourth estimation section 144 may estimate the location of the moving object 110 based on the above-described locational relationship.

According to the present embodiment, the fifth estimation section 145 calculates (i) a relative locational relationship between at least one landmark 104 included in the image captured by the image capturing section 112 and the moving object 110, and (ii) a relative locational relationship between at least one of the transmitters 106 that have respectively emitted at least one of the signals 10 received by the reception section 114 and the moving object 110. The fifth estimation section 145 may estimate the location of the moving object 110 based on the above-described locational relationships.

### [Specific configuration of each portion of moving object 110]

Each portion of the moving object 110 may also be realized by hardware, may also be realized by software, or may also be realized by hardware and software. In a case where at least a part of components constituting the moving object 110 is realized by software, the component realized by the software may be realized by activating a program that defines the operation related to the component in an information processing apparatus having a general configuration.

The above-described information processing apparatus may include (i) a data processing device having processors such as a CPU or a GPU, a ROM, a RAM, a communication interface, and the like, (ii) input devices such as a keyboard, a touch panel, a camera, a microphone, various types of sensors, and a GPS receiver, (iii) output devices such as a display device, a speaker, and a vibration device, and (iv) storage devices (including external storage devices) such as a memory and a HDD. In the above-described information processing apparatus, the above-described data processing device or storage device may store the above-described program. The above-described program causes the information processing apparatus described above to perform the operations defined by this program, by being executed by the processor. The above-described program may also be stored in a non-transitory computer readable recording medium.

The above-described program may be a program that causes a computer to function as the control apparatus 120. The above-described computer may also be (i) a computer mounted to the moving object 110, or may also be (ii) a computer that serves as a computer outside the moving object 110 and controls the moving object 110 via the communication network.

The above-described program may also be a program that causes a computer to execute one or a plurality of procedures related to various types of information processing in the control apparatus 120. The above-described program may also be a control program for executing one or a plurality of procedures related to the control of the moving object 110. The one or the plurality of procedures described above may have an information obtaining step of obtaining information related to at least one of the image captured by the image capturing section and the signal received by the reception section. The above-described one or a plurality of procedures may have a location estimation step of analyzing at least one of the image captured by the image capturing section and the signal received by the reception section, and estimating a location of the moving object.

The location estimation step may include a first estimation step of calculating a relative locational relationship between at least two landmarks included in the image captured by the image capturing section and the moving object, and estimating the location of the moving object based on the relative locational relationship. The location estimation step may include a second estimation step of calculating a relative locational relationship between at least two parts of the single landmark included in the image captured by the image capturing section and the moving object, and estimating the location of the moving object based on the relative locational relationship. The location estimation step may include a third estimation step of calculating a relative locational relationship between at least two of transmitters that respectively have emitted at least two of signals received by the reception section and the moving object, and estimating the location of the moving object based on the relative locational relationship. The location estimation step may include a fourth estimation step of calculating a relative locational relationship between the single transmitter that has emitted each of the at least two signals received by the reception section and the moving object, and estimating the location of the moving object based on the relative locational relationship. The location estimation step may include a fifth estimation step of calculating (i) a relative locational relationship between at least one landmark included in the image captured by the image capturing section and the moving object, and (ii) a relative locational relationship between at least one of transmitters that have respectively output at least one of signals received by the reception section and the moving object, and estimating the location of the moving object based on the relative locational relationships.

### [0utline of management system 200]

FIG. 2 schematically illustrates one example of a system configuration of a management system 200. According to the present embodiment, the management system 200 includes the lawn mower 210, a charging station 220, and a management server 230. The management system 200 may also include a user terminal 22.

According to the present embodiment, for the sake of simplicity of descriptions, a detail of the management system 200 will be described by using a case as an example where the computer mounted to the lawn mower 210 autonomously travels inside a work region 202 while estimating the self-location. However, the management system 200 is not limited to the present embodiment. According to another embodiment, at least one of the user terminal 22, the charging station 220, and the management server 230 may also estimate a current location of the lawn mower 210.

According to the present embodiment, a structure 42, a structure 44, and a structure 46 are disposed inside and in a surrounding of the work region 202 as one example of the landmark 104. An entire shape and size of each of the structure 42, the structure 44, and the structure 46 may also be used for the location estimation processing, and a mark or pattern disposed in a part thereof may also be used for the location estimation processing.

According to the present embodiment, the structure 42 and the structure 44 are disposed inside the work region 202. On the other hand, the structure 46 is disposed outside the work region 202. According to the present embodiment, the structure 42 is disposed in the vicinity of the center of the work region 202. The structure 44 is disposed in the vicinity of a boundary of the work region 202. The structure 46 is arranged in the surrounding of the boundary of the work region 202.

According to the present embodiment, a transmitter 62, a transmitter 64, and a transmitter 66 are disposed inside and a surrounding of the work region 202 as one example of the transmitter 106. Each of the transmitter 62, the transmitter 64, and the transmitter 66 may emit one or a plurality of positioning signals 12. Each of the transmitter 62, the transmitter 64, and the transmitter 66 may also emit one or a plurality of types of the positioning signals 12 in one or a plurality of directions.

According to the present embodiment, the transmitter 62 and the transmitter 64 are disposed inside the work region 202. On the other hand, the transmitter 66 is disposed outside the work region 202. According to the present embodiment, the transmitter 62 is disposed in the vicinity of the center of the work region 202. The transmitter 64 is disposed in the vicinity of the boundary of the work region 202. The transmitter 66 is disposed in the surrounding of the boundary of the work region 202.

The positioning signal 12 may be one example of the signal. The lawn mower 210 may be one example of the moving object. The lawn mower 210 may be one example of the control apparatus. The user terminal 22 may be one example of the control apparatus. The charging station 220 may be one example of the control apparatus. The management server 230 may be one example of the control apparatus.

Each portion of the management system 200 may also mutually transmit and receive information. For example, the lawn mower 210 transmits and receives the information with at least one of the user terminal 22 and the management server 230 via a communication network 20. In a case where the charging station 220 is connected to the communication network 20, the lawn mower 210 may also transmit and receive the information with at least one of the user terminal 22 and the management server 230 via the charging station 220.

According to the present embodiment, the communication network 20 may also be a wired communication transmission path, may also be a wireless communication transmission path, or may also be a combination of a wireless communication transmission path and a wired communication transmission path. The communication network 20 may also include a wireless packet communication network, the Internet, a P2P network, a dedicated line, a VPN, a power line communication link, and the like. The communication network 20 may also include (i) a mobile communication network such as a mobile phone line network, or may also include (ii) a wireless communication network such as a wireless MAN (for example, WiMAX (registered trademark)), a wireless LAN (for example, WiFi (registered trademark)), Bluetooth (registered trademark), Zigbee (registered trademark), or NFC (Near Field Communication).

According to the present embodiment, the user terminal 22 is a communication terminal used by a user of the management system 200 or the lawn mower 210, and a detail thereof is not particularly limited. As the user terminal 22, a personal computer, a mobile terminal, and the like are exemplified. As the mobile terminal, a mobile phone, a smartphone, a PDA, a tablet, a notebook computer, a laptop computer, a wearable computer, and the like are exemplified.

According to the present embodiment, the management system 200 manages the work region 202. The work region 202 may be a region where the entry of the lawn mower 210 is permitted. The work region 202 may have any geographical range. The work region 202 may have a predetermined geographical range.

According to the present embodiment, geographical information related to the work region 202 (which may be referred to as map information in some cases) is managed. For example, the management system 200 manages information related to the boundary of the work region 202. The management system 200 may also manage information related to the structure 42, the structure 44, and the structure 46. The management system 200 may also manage information related to the transmitter 62, the transmitter 64, and the transmitter 66.

According to the present embodiment, the management system 200 manages the state of the work region 202. The management system 200 may also manage a state of an object (which may be referred to as a work target in some cases) on which a work is to be performed in the work region 202. The management system 200 may also manage the work performed in the work region 202. For example, the management system 200 manages a schedule of the work. The schedule of the work may be information that defines at least one of a time when the work is performed, a location where the work is performed, an entity that performs the work, the work target, and contents of the work.

According to the present embodiment, the management system 200 manages the lawn mower 210. The lawn mower 210 may be one example of the entity that performs the work. For example, the management system 200 manages the state of the lawn mower 210. For example, the management system 200 manages the location, the progress direction, the progress speed, and the energy remaining amount (for example, the remaining amount of a battery) of the lawn mower 210, the schedule of the work performed by the lawn mower 210, and the like.

It is noted that according to the present embodiment, for the sake of simplicity of descriptions, as an example in which the management system 200 manages the lawn mower 210, the detail of the management system 200 will be described. However, the management system 200 is not limited to the present embodiment. According to another embodiment, the management system 200 may also manage the working machinery other than the lawn mower 210. The working machinery may perform various works. As the type of the work, (i) civil engineering work, (ii) construction work, (iii) cultivation work for plant or agricultural product, (iv) snow clearing work, (v) cleaning work, (vi) transport work, (vii) monitoring, guard duty, or security work, and the like are exemplified. As the cultivation work, sowing, pruning, lawn mowing, grass cutting, watering, fertilizing, soiling, weeding, and the like are exemplified. The working machinery may have the autonomous movement function. The working machinery may be one example of the moving object.

### [Outline of each section of management system 200]

According to the present embodiment, the work region 202 may have a configuration similar to the region 102 as long as a technical contradiction is not made. Similarly, the region 102 may have a configuration similar to the work region 202 as long as a technical contradiction is not made. According to the present embodiment, the lawn mower 210 may have a configuration similar to the moving object 110 as long as a technical contradiction is not made. Similarly, the moving object 110 may have a configuration similar to the lawn mower 210 as long as a technical contradiction is not made.

According to the present embodiment, the lawn mower 210 has the autonomous movement function, and autonomously travels inside the work region 202. It is noted that the lawn mower 210 may also be moved by a remote operation by the user. The lawn mower 210 cuts the lawn growing inside the work region 202. The lawn mower 210 may also travel while cutting the lawn, or may also travel without cutting the lawn. The lawn may be one example of the work target. A detail of the lawn mower 210 will be described below. According to the present embodiment, the charging station 220 charges the lawn mower 210.

According to the present embodiment, the management server 230 manages various types of information related to the work region 202. For example, the management server 230 manages the map information of the work region 202. The management server 230 may execute processing such as generation, update, deletion, and search of the map information.

The map information includes, for example, information indicating a location and a range of the boundary of the work region 202. The range of the boundary may indicate a size and a shape of the boundary. The map information may include information related to the structure 42, the structure 44, and the structure 46. The map information may also include information related to the transmitter 62, the transmitter 64, and the transmitter 66.

With regard to the information related to the structure 44 and the structure 46, for example, the management system 200 includes information related to the location, the size, the shape, and the color of each of the structure 42, the structure 44, and the structure 46. The information related to the structure 44 and the structure 46 may also include information related to the location, the size, the shape, the pattern, and the color of each of at least one or more of the marks or patterns disposed in each of the structure 42, the structure 44, and the structure 46.

In a case where one or more of the marks or patterns are represented by light, the information related to the structure 44 and the structure 46 may also include information indicating at least one of an appearance time and an appearance pattern of one or more of the marks or patterns. In a case where one or more of the marks or patterns rotate, the information related to the structure 44 and the structure 46 may also include information indicating at least one of a rotation speed of one or more of the marks or patterns and a timing when one or more of the marks or patterns appears in a particular orientation.

The information related to the transmitter 62, the transmitter 64, and the transmitter 66 includes, for example, information indicating a location of each of the transmitter 62, the transmitter 64, and the transmitter 66. The information related to the transmitter 62, the transmitter 64, and the transmitter 66 may also include information related to the positioning signal 12 emitted by each of the transmitter 62, the transmitter 64, and the transmitter 66. As the information related to the positioning signal 12, information indicating a type of the positioning signal 12, an emission direction of the positioning signal 12, and the like are exemplified.

The management server 230 may also manage the state of the work region 202 The management server 230 may also manage the state of the work target. The management server 230 may also manage the work performed in the work region 202. The management server 230 may also manage the state of the lawn mower 210. For example, the management server 230 manages the location, the progress direction, the progress speed, and the energy remaining amount of the lawn mower 210, the schedule of the work performed by the lawn mower 210, and the like. A detail of the management server 230 will be described below.

### [Specific configuration of each portion of management system 200]

Each portion of the management system 200 may also be realized by hardware, may also be realized by software, or may also be realized by hardware and software. At least a part of each portion of the management system 200 may also be realized by a single server, or may also be realized by a plurality of servers. At least a part of each portion of the management system 200 may also be realized on a virtual server or a cloud system. At least a part of each portion of the management system 200 may also be realized by a personal computer or a mobile terminal. As the mobile terminal, a mobile phone, a smartphone, a PDA, a tablet, a notebook computer, a laptop computer, a wearable computer, and the like are exemplified. The management system 200 may also store the information by using a distributed ledger technology or a distributed network such as a block chain.

In a case where at least a part of components constituting the management system 200 is realized by software, the component realized by the software may be realized by activating a program that defines the operation related to the component in an information processing apparatus having a general configuration. The above-described information processing apparatus may include (i) a data processing device having processors such as a CPU or a GPU, a ROM, a RAM, a communication interface, and the like, (ii) input devices such as a keyboard, a touch panel, a camera, a microphone, various types of sensors, and a GPS receiver, (iii) output devices such as a display device, a speaker, and a vibration device, and (iv) storage devices (including external storage devices) such as a memory and a HDD. In the above-described information processing apparatus, the above-described data processing device or storage device may store the above-described program. The above-described program causes the information processing apparatus described above to perform the operations defined by this program, by being executed by the processor. The above-described program may also be stored in a non-transitory computer readable recording medium.

The above-described program may also be a program that causes a computer to execute one or a plurality of procedures related to various types of information processing in the management system 200. The above-described computer may be a computer mounted to at least one of the user terminal 22, the lawn mower 210, the charging station 220, and he management server 230.

[Outline of lawn mower 210]

An outline of the lawn mower 210 will be described with reference to FIG. 3 to FIG. 6. FIG. 3 schematically illustrates one example of an internal configuration of the lawn mower 210. According to the present embodiment, the lawn mower 210 includes an enclosure 302. According to the present embodiment, the lawn mower 210 includes a pair of front wheels 312 and a pair of rear wheels 314 under the enclosure 302. The lawn mower 210 may include a pair of travel motors 316 that respectively drive a pair of rear wheels 314. The travel motor 316 may be one example of the drive section of the lawn mower 210.

According to the present embodiment, the lawn mower 210 includes a work unit 320. The work unit 320 has, for example, a blade disk 322, a cutter blade 324, a work motor 326, and a shaft 328. The lawn mower 210 may also include a location adjustment section 330 that adjusts a location of the work unit 320.

The blade disk 322 is coupled to the work motor 326 via the shaft 328. The cutter blade 324 may be a cutting blade that cuts lawn. The cutter blade 324 is attached to the blade disk 322, and rotates together with the blade disk 322. The work motor 326 rotates the blade disk 322. The blade disk 322 and the cutter blade 324 may be one example of a cutting member that cuts the work target.

According to the present embodiment, the lawn mower 210 includes a battery unit 340, a user interface 350, an image capturing unit 364, a reception unit 366, a sensor unit 370, and a control unit 380 inside the enclosure 302 or on the enclosure 302. The control unit 380 may be one example of the control apparatus.

According to the present embodiment, the battery unit 340 supplies power to each section of the lawn mower 210. According to the present embodiment, the user interface 350 accepts an input of the user. The user interface 350 outputs information to the user. As the user interface 350, a keyboard, a pointing device, a microphone, a touch panel, a display, a speaker, and the like are exemplified.

According to the present embodiment, the image capturing unit 364 captures an image of a surrounding of the lawn mower 210. The image capturing unit 364 may capture an image of at least one of the structure 42, the structure 44, and the structure 46. While the lawn mower 210 is on the move, the image capturing unit 364 may adjust at least one of the image capturing condition and the image capturing direction such that at least one of the structure 42, the structure 44, and the structure 46 is included in an angle of view.

The image capturing unit 364 (i) may also have a single image capturing device, or (ii) may also have a plurality of image capturing devices. The image capturing unit 364 may have a supporting member configured to be rotatable and support the image capturing device. The image capturing unit 364 may have an optical system at least partially including a member configured to be rotatable. As long as a technical contradiction is not made, the image capturing unit 364 may also have a configuration similar to the image capturing section 112. Similarly, as long as a technical contradiction is not made, the image capturing section 112 may also have a configuration similar to the image capturing unit 364.

According to the present embodiment, the reception unit 366 receives the positioning signal 12. The reception unit 366 may measure a reception intensity of the positioning signal 12. The reception unit 366 may decide a reception direction of the positioning signal 12. While the lawn mower 210 is on the move, the reception unit 366 may adjust at least one of the reception condition and the reception direction such that the positioning signal 12 emitted by at least one of the transmitter 62, the transmitter 64, and the transmitter 64 is received.

The reception unit 366 (i) may also have a single reception device, or (ii) may also have a plurality of reception devices. The reception unit 366 may have a supporting member configured to be rotatable and support the reception device. The reception unit 366 may have a waveguide member at least partially including a member configured to be rotatable. As long as a technical contradiction is not made, the reception unit 366 may also have a configuration similar to the reception section 114. Similarly, as long as a technical contradiction is not made, the reception section 114 may also have a configuration similar to the reception unit 366.

According to the present embodiment, the sensor unit 370 includes various sensors. The sensor unit 370 may include various internal sensors. The sensor unit 370 may include various external sensors. As the sensor, a millimeter wave sensor, a proximity detection sensor, an acceleration sensor, an angular velocity sensor, a wheel speed sensor, a load sensor, an idling detection sensor, a magnetic sensor, a geomagnetic sensor (also referred to as an orientation sensor, an electronic compass, and the like in some cases), a temperature sensor, a moisture sensor, a soil moisture sensor, and the like are exemplified. The sensor unit 370 may transmit outputs of various sensors to the control unit 380. The wheel speed sensor may also be a rotary encoder configured to detect a rotation angle or a rotation number of the wheel.

According to the present embodiment, the control unit 380 controls an operation of the lawn mower 210. According to one embodiment, the control unit 380 controls the one pair of travel motors 316 to control the movement of the lawn mower 210. According to another embodiment, the control unit 380 controls the work motor 326 to control the work of the lawn mower 210.

The control unit 380 may also control the lawn mower 210 based on an instruction from the management server 230. For example, the control unit 380 controls the lawn mower 210 following the command generated by the management server 230. As long as a technical contradiction is not made, the control unit 380 may also have a configuration similar to the control apparatus 120. Similarly, as long as a technical contradiction is not made, the control apparatus 120 may also have a configuration similar to the control unit 380. A detail of the control unit 380 will be described below.

FIG. 4 schematically illustrates one example of an internal configuration of the control unit 380. According to the present embodiment, the control unit 380 includes a communication control section 410, a travel control section 420, a work unit control section 430, an input and output control section 440, a positioning section 450, and a storage section 460.

The travel control section 420 may be one example of a movement control section. The work unit control section 430 may be one example of an operation mode control section. The input and output control section 440 may be one example of a sensor control section. The positioning section 450 may be one example of the control apparatus. The storage section 460 may be one example of a movement history storage section.

According to the present embodiment, the communication control section 410 controls a communication with an external apparatus of the lawn mower 210. The communication control section 410 may also be a communication interface compatible with one or a plurality of communication methods. As the external apparatus, the user terminal 22, the charging station 220, the management server 230, and the like are exemplified.

According to the present embodiment, the travel control section 420 controls the movement of the lawn mower 210. For example, the travel control section 420 controls the travel motor 316 to control the movement of the lawn mower 210. The travel control section 420 controls autonomous travel of the lawn mower 210. For example, the travel control section 420 controls at least one of the movement mode, the progress speed, the progress direction, and the movement route of the lawn mower 210. The travel control section 420 may also monitor a current value of the travel motor 316.

The movement mode may be information for defining at least one of (i) a setting related to at least one of the progress speed and the progress direction, and (ii) an algorithm for deciding at least one of the progress speed and the progress direction. The progress direction of the lawn mower 210 is decided by the operation of the lawn mower 210 in a case where, for example, the lawn mower 210 reaches any boundary. The progress direction of the lawn mower 210 may also be indicated by the orientation or the bearing.

As one example of the movement mode, (i) a mode for performing any work on the work target disposed inside the work region 202 during the movement, (ii) a mode for creating the map information without performing the above-described work during the movement, (iii) a mode for creating the map information while performing the above-described work during the movement, (iv) a mode for simply moving without performing the above-described work or creating the map information during the movement, (v) a mode for moving while suppressing noise generation, (vi) a mode for returning to a return location, and the like are exemplified. The above-described movement mode defines, for example, at least one of the setting related to the progress speed and the algorithm for deciding the progress speed. The above-described movement mode may also further define the operation in a case where the lawn mower 210 reaches any boundary.

As another example of the movement mode, (i) a mode for moving along a predetermined path (which may be referred to as a program mode in some cases), (ii) a mode for moving along the boundary after reaching the known boundary (which may be referred to as a guide mode in some cases), (iii) a mode for detecting, after reaching any boundary, a location, a size, and a range or a shape of the boundary while moving in a surrounding of the boundary (which may be referred to as a shape detection mode in some cases), (iv) a mode for turning in a direction decided based on any probability model after reaching any boundary, and continuing the movement (which may be referred to as a first random mode in some cases), (v) a mode for turning in a direction decided based on any probability model having a restriction condition after reaching any boundary, and continuing the movement (which may be referred to as a second random mode in some cases), (vi) a mode for moving while repeating the straight-ahead progress and making a turn such that a plurality of parallel paths are disposed without any gap or at a predetermined gap (which may be referred to as a parallel mode in some cases), and the like are exemplified. As a shape of the path in the parallel mode, a straight line shape, a curved line shape, a zig-zag shape, and a combination of these are exemplified. The above-described movement mode defines, for example, the operation of the lawn mower 210 in a case where the lawn mower 210 reaches any boundary. The above-described movement mode may also further define at least one of the setting related to the progress speed and algorithm for deciding the progress speed.

According to the present embodiment, the travel control section 420 controls the movement of the lawn mower 210 in accordance with the state of the positioning. For example, the positioning section 450 outputs information indicating (i) the number of landmarks recognized by the positioning section 450, (ii) the number of some landmarks that can be used for positioning and correspond to a part of the landmarks, or (iii) the number of transmitters. The positioning section 450 may also output information indicating that the above-described number becomes lower than a predetermined value. The positioning section 450 may also output information indicating that, after the above-described number becomes lower than a predetermined value, the above-described number increases to be higher than the predetermined value. The travel control section 420 obtains the above-described information from the positioning section 450.

According to one embodiment, in a case where (i) the number of landmarks recognized by the positioning section 450, (ii) the number of some landmarks that can be used for positioning and correspond to a part of the landmarks, or (iii) the number of transmitters is lower than the predetermined value, the travel control section 420 controls the movement of the lawn mower 210 such that the lawn mower 210 progresses on the track of the lawn mower 210 in a reverse direction. The travel control section 420 may also refer to information indicating a movement history of the lawn mower 210 which is stored in the storage section 460, and control the movement of the lawn mower 210.

According to another embodiment, in a case where (i) the number of landmarks recognized by the positioning section 450, (ii) the number of some landmarks that can be used for positioning and correspond to a part of the landmarks, or (iii) the number of transmitters is lower than a predetermined value, until the above-described number becomes higher than the predetermined value, the travel control section 420 may control the movement of the lawn mower 210 based on the location of the lawn mower 210 that has been estimated using the output of the internal sensor included in the sensor unit 370. The location of the lawn mower 210 that has been estimated using the output of the internal sensor included in the sensor unit 370 may be one example of the location of the moving object estimated by a sixth estimation section.

According to the present embodiment, the work unit control section 430 controls the work unit 320. The work unit control section 430 may control at least one of type of the work, an intensity of the work, and the timing for performing the work of the work unit 320. For example, the work unit control section 430 controls the work motor 326 to control the intensity of the work of the work unit 320. The work unit control section 430 may also control the location adjustment section 330 to control the intensity of the work of the work unit 320. The work unit control section 430 may monitor a current value of the work motor 326.

According to the present embodiment, the work unit control section 430 controls the work mode of the lawn mower 210. The work mode may define whether the work is to be performed. The work mode may define the type of the work to be performed. The work mod may define the intensity of the work to be performed. The work mode may be one example of the operation mode.

The work mode defines at least one of (i) whether the work can be performed, and (ii) the work intensity. As the work mode, (i) a mode in which the work is performed on the move, (ii) a mode in which the work is stopped or interrupted during the movement, (iii) a mode in which the work is performed during the straight-ahead progress, but the work is stopped or interrupted during a turning operation, and the like are exemplified.

As other examples of the work mode, (i) a mode in which the work intensity is relatively large, (ii) a mode in which the work intensity is intermediate, (iii) a mode in which the work intensity is relatively small, and the like are exemplified. As another example of the work mode, (iv) a mode for returning to the charging station 220, (v) a mode for moving from the charging station 220 to a work starting location of an objective work, and the like are exemplified.

As the work intensity, a work frequency during a particular period, work load per work, total work load during a particular period, and the like are exemplified. The work intensity may also be represented by continuous numeric values or may also be represented by stepwise classifications. Each of the classifications may also be distinguished by a symbol or a letter, may also be distinguished by a number.

According to the present embodiment, the work unit control section 430 controls the operation mode of the lawn mower 210 in accordance with the state of the positioning. For example, the positioning section 450 outputs the information indicating (i) the number of landmarks recognized by the positioning section 450, (ii) the number of some landmarks that can be used for positioning and correspond to a part of the landmarks, or (iii) the number of transmitters. The positioning section 450 may also output information indicating that (i) the number of landmarks recognized by the positioning section 450, (ii) the number of some landmarks that can be used for positioning and correspond to a part of the landmarks, or (iii) the number of transmitters becomes lower than the predetermined value. The work unit control section 430 obtains the above-described information from the positioning section 450.

According to one embodiment, in a case where a predetermined period of time elapses after (i) the number of landmarks recognized by the positioning section 450, (ii) the number of some landmarks that can be used for positioning and correspond to a part of the landmarks, or (iii) the number of transmitters becomes lower than a predetermined value, the work unit control section 430 sets the work mode of the lawn mower 210 in a predetermined work mode as the work mode of the above-described case. For example, the work unit control section 430 sets the work mode of the lawn mower 210 as (i) the work mode in which the work is not performed, or, (ii) the work mode having a lower work intensity of the work than the current work mode.

According to another embodiment, in a case where a movement distance of the lawn mower 210 satisfies the predetermined condition after (i) the number of landmarks recognized by the positioning section 450, (ii) the number of some landmarks that can be used for positioning and correspond to a part of the landmarks, or (iii) the number of transmitters becomes lower than a predetermined value, the work unit control section 430 sets the work mode of the lawn mower 210 in a predetermined work mode as the work mode in the above-described case. As the predetermined condition, a condition where the above-described movement distance is equal to or higher than a predetermined threshold, a condition where the movement distance is higher than the predetermined threshold, and the like are exemplified. For example, the work unit control section 430 sets the work mode of the lawn mower 210 in (i) the work mode in which the work is not performed, or, (ii) the work mode having the lower work intensity of the work than the current work mode.

According to the present embodiment, the input and output control section 440 accepts an input from at least one of the user interface 350, the image capturing unit 364, the reception unit 366, and the sensor unit 370. The input and output control section 440 outputs the information to the user interface 350. The input and output control section 440 may also control at least one of the user interface 350, the image capturing unit 364, the reception unit 366, and the sensor unit 370.

For example, the input and output control section 440 controls at least one of the image capturing unit 364 and the reception unit 366. According to one embodiment, the input and output control section 440 controls the image capturing unit 364 such that a particular landmark among one or more of the landmarks is included in an angle of view even when the lawn mower 210 moves. In a case where two or more landmarks are included in an image captured by the image capturing unit 364, the input and output control section 440 may set one of the two or more landmarks as the particular landmark.

In a case where at least one of a location and a size of the particular landmark in the image captured by the image capturing unit 364 satisfies the predetermined condition, the input and output control section 440 may also set another landmark included in the image as a particular landmark for a next time. As the predetermined condition, (i) a condition where an estimated value of the distance between the lawn mower 210 and the current particular landmark is equal to or lower than a predetermined threshold, (ii) a condition where the estimated value of the distance between the lawn mower 210 and the current particular landmark is higher than the predetermined threshold, (iii) a condition where a ratio of the area occupied by the current particular landmark to the area of the entire image is equal to or lower than a predetermined threshold, (iv) a condition where the ratio of the area occupied by the current particular landmark to the area of the entire image is lower than the predetermined threshold, and the like are exemplified. The above-described ratio may also be calculated based on the number of pixels occupied by the current particular landmark.

According to another embodiment, the input and output control section 440 controls the reception unit 366 such that the positioning signal 12 from a particular transmitter among the one or more transmitters is received even when the lawn mower 210 moves. In a case where the reception unit 366 receives the positioning signals 12 from two or more of the transmitters, the input and output control section 440 may set one of the two or more of the transmitters as the particular transmitter.

In a case where the intensity of the signal from the particular transmitter satisfies the predetermined condition, the input and output control section 440 may set another transmitter in which the reception section receives the signal as a particular landmark for a next time. As the predetermined condition, (i) a condition where a reception intensity of the signal from the current particular transmitter is equal to or lower than a predetermined threshold, (ii) a condition where the reception intensity of the signal from the current particular transmitter is lower than the predetermined threshold, and the like are exemplified.

According to the present embodiment, the positioning section 450 analyzes at least one of the image captured by the image capturing unit 364 and the positioning signal 12 received by the reception unit 366, and estimates the location of the lawn mower 210. According to the present embodiment, the positioning section 450 receives the output data of at least one of the image capturing unit 364 and the reception unit 366 as an input, and outputs the information indicating the estimated location of the lawn mower 210.

According to the present embodiment, the positioning section 450 may also receive the positioning information indicated by the GPS signal received by the GPS receiver included in the sensor unit 370 as an input, and may also output information indicating the estimated location of the lawn mower 210. According to the present embodiment, the positioning section 450 may also receive the output data of the internal sensor included in the sensor unit 370 as an input, and may also output information indicating the estimated location of the lawn mower 210. The positioning section 450 may also receive the output data of at least one of the image capturing unit 364 and the reception unit 366, and the output data of the sensor unit 370 as inputs, and may also output information indicating the estimated location of the lawn mower 210.

The positioning section 450 may also output information indicating the positioning precision of the location of the lawn mower 210. A representation format of the information representing the positioning precision is not particularly limited. As the representation format of the positioning precision, RMS (root mean square), DRMS (distance root mean square), 2DRMS, CEP (circular error probable), RMSE (root mean square error), and the like are exemplified. The positioning precision may also be represented as a positioning error [m or cm].

The positioning section 450 may output the information indicating that the defect has occurred to at least one of the structure 42, the structure 44, and the structure 46 or at least a part of one or more of the marks or patterns for the positioning disposed in these structures. The positioning section 450 may output the information indicating that the defect has occurred to at least one of the transmitter 62, the transmitter 64, and the transmitter 66.

The positioning section 450 may also output information indicating the number of landmarks recognized by the positioning section 450. The positioning section 450 may also output information indicating the number of transmitters recognized by the positioning section 450. The information indicating the above-described number may be the landmark recognized by the positioning section 450 or the identification information of the transmitter.

As long as a technical contradiction is not made, the positioning section 450 may also have a configuration similar to the control apparatus 120 or the location estimation section 140. Similarly, as long as a technical contradiction is not made, at least one of the control apparatus 120 and the location estimation section 140 may also have a configuration similar to the positioning section 450.

According to the present embodiment, the storage section 460 stores various types of information. According to one embodiment, the storage section 460 stores the map information. The storage section 460 may also store the map information of the whole area of the work region 202, or may also store the map information related to a region corresponding to a part of the work region 202. For example, the storage section 460 may store the map information in the vicinity of the current location of the lawn mower 210. According to another embodiment, the storage section 460 may also store the information indicating the movement history of the lawn mower 210.

FIG. 5 schematically illustrates one example of an internal configuration of the positioning section 450. According to the present embodiment, the positioning section 450 includes, for example, an image capturing information obtaining section 510 and an image analysis section 520. The image analysis section 520 may include a landmark recognition section 522, a first positioning section 524, and a second positioning section 526. According to the present embodiment, the positioning section 450 includes, for example, a reception information obtaining section 530 and a signal analysis section 540. The signal analysis section 540 may have a transmitter recognition section 542, a third positioning section 544, and a fourth positioning section 546. The positioning section 450 may include a fifth positioning section 550. The positioning section 450 may include a sensor information obtaining section 560 and a sixth positioning section 570. The positioning section 450 may include an output section 580.

The image capturing information obtaining section 510 may be one example of an information obtaining section. The image analysis section 520 may be one example of a location estimation section. The landmark recognition section 522 may be one example of a recognition section. The first positioning section 524 may be one example of a first estimation section. The second positioning section 526 may be one example of a second estimation section. The reception information obtaining section 530 may be one example of the information obtaining section. The signal analysis section 540 may be one example of the location estimation section. The transmitter recognition section 542 may be one example of the recognition section. The third positioning section 544 may be one example of a third estimation section. The fourth positioning section 546 may be one example of a fourth estimation section. The fifth positioning section 550 may be one example of a fifth estimation section. The sixth positioning section 570 may be one example of a sixth estimation section.

As long as a technical contradiction is not made, each section of the positioning section 450 may have a configuration similar to a corresponding element of the control apparatus 120. Similarly, each section of the control apparatus 120 may have a configuration similar to a corresponding element of the positioning section 450.

According to the present embodiment, the image capturing information obtaining section 510 obtains the information output by the image capturing unit 364. The image capturing information obtaining section 510 transmits the obtained information to the image analysis section 520. According to the present embodiment, the image analysis section 520 receives the information output by the image capturing unit 364 as an input, and outputs the information indicating the estimated location of the lawn mower 210. The image analysis section 520 may analyze the image captured by the image capturing unit 364 and estimate the location of the lawn mower 210.

According to the present embodiment, the landmark recognition section 522 analyzes the image captured by the image capturing unit 364, and recognizes the landmark existing in the surrounding of the lawn mower 210. The landmark recognition section 522 may also recognize some part of the landmarks which can be used for the positioning (this part may also be one example of the landmark). The landmark recognition section 522 refers, for example, to the map information stored in the storage section 460, and recognizes the landmarks. The landmark recognition section 522 may output information indicating the number of recognized landmarks. The landmark recognition section 522 may also output the identification information of the recognized landmark.

According to the present embodiment, the first positioning section 524 calculates a relative locational relationship between each of at least two landmarks recognized by the landmark recognition section 522 and the lawn mower 210. The first positioning section 524 may calculate the above-described locational relationship based on the single image in which the two or more landmarks are captured. The first positioning section 524 may also calculate the above-described locational relationship based on two or three or more of the images in which the same object is captured by two or three or more of the image capturing devices the locations of which in the lawn mower 210 are already known. The first positioning section 524 may estimate the location of the lawn mower 210 based on the above-described locational relationship.

The above-described locational relationship may be represented by a degree of angle defined by each of at least two landmarks and a representative point of the lawn mower 210. The above-described locational relationship may also be represented by (i) a degree of angle defined by each of at least two landmarks and the representative point of the lawn mower 210, and (ii) a distance between each of at least two landmarks and the representative point of the lawn mower 210.

According to the present embodiment, the second positioning section 526 calculates a relative locational relationship each of at least two parts of the single landmark recognized by the landmark recognition section 522 (the parts may also be one example of the landmark) and the lawn mower 210. The second positioning section 526 may calculate the above-described relative relationship based on the single image in which two or more parts that can be used for the positioning are captured. The second positioning section 526 may also calculate the above-described locational relationship based on two or three or more of the images in which the same object is captured by two or three or more of the image capturing devices the locations of which in the lawn mower 210 are already known. The second positioning section 526 may estimate the location of the lawn mower 210 based on the above-described locational relationship.

The above-described locational relationship may be represented by a degree of angle defined by each of at least two parts and the representative point of the lawn mower 210. The above-described locational relationship may also be represented by (i) a degree of angle defined by each of at least two parts and the representative point of the lawn mower 210, and (i) a distance between each of at least two parts and the representative point of the lawn mower 210.

According to the present embodiment, the reception information obtaining section 530 obtains the information output by the reception unit 366. The reception information obtaining section 530 transmits the obtained information to the signal analysis section 540. According to the present embodiment, the signal analysis section 540 receives the information output by the reception unit 366 as an input, and outputs the information indicating the estimated location of the lawn mower 210. The signal analysis section 540 may analyze the positioning signal 12 received by the reception unit 366, and estimate the location of the lawn mower 210.

According to the present embodiment, the transmitter recognition section 542 analyzes the positioning signal 12 received by the reception unit 366, and recognizes the transmitter existing in the surrounding of the lawn mower 210. The transmitter recognition section 542 recognizes the transmitter by referring, for example, to the map information stored in the storage section 460. The transmitter recognition section 542 may output information indicating the number of recognized transmitters. The transmitter recognition section 542 may also output the identification information of the recognized transmitter.

According to the present embodiment, the third positioning section 544 calculates a relative locational relationship between at least two transmitters recognized by the transmitter recognition section 542 and the lawn mower 210. The third positioning section 544 may calculate the above-described locational relationship by using the output data of the single reception device. The third positioning section 544 may also calculate the above-described locational relationship by using the output data of two or three or more of reception devices. The third positioning section 544 may estimate the location of the lawn mower 210 based on the above-described locational relationship.

According to one embodiment, the above-described output data includes information indicating the reception direction of each positioning signal. The third positioning section 544 may calculate the above-described locational relationship based on the information indicating the reception directions of at least two of the positioning signals 12 and the information indicating the locations of the transmitters that have respectively emitted the positioning signals. According to another embodiment, the above-described output data may include the information indicating the reception intensity of each positioning signal. The third positioning section 544 may estimate a distance between the transmitters that have respectively emitted the positioning signals and the representative point of the lawn mower 210 based on the information indicating the reception intensity of each positioning signal. The third positioning section 544 may calculate the above-described locational relationship based on the information indicating the reception directions of at least two of the positioning signals 12, the information indicating the above-described estimated distance, and the information indicating the locations of the transmitters that have respectively emitted the positioning signals.

According to the present embodiment, the fourth positioning section 546 specifies the single transmitter that has emitted at least two of the positioning signals 12 based on the output result of the transmitter recognition section 542. The fourth positioning section 546 calculates a relative locational relationship between the single transmitter that has emitted at least two of the positioning signals 12 and the lawn mower 210. For example, the above-described locational relationship is calculated by analyzing output data of the reception devices that have respectively received at least two of the positioning signals 12. The fourth positioning section 546 may estimate the location of the lawn mower 210 based on the above-described locational relationship.

The fourth positioning section 546 may also calculate the above-described locational relationship by using output data related to the same positioning signal 12 of two or three or more of the reception devices. Each of at least two of the positioning signals 12 preferably has directivity. An attempt range angle of each of at least two of the positioning signals 12 is preferably already known.

According to one embodiment, in a case where the emission direction of the positioning signal 12 changes, when a fluctuation pattern of the emission direction is already known, the fourth positioning section 546 may estimate a distance between the single transmitter that has emitted at least two of the positioning signals 12 and the representative point of the lawn mower 210 based on at least one of a reception period per reception of the positioning signal 12 and a reception interval of the positioning signal 12. The fourth positioning section 546 may estimate the distance between the above-described single transmitter and the representative point of the lawn mower 210 based on the output data of each of two or three or more of the reception devices. The above-described locational relationship may be calculated based on the information indicating the reception direction indicated by the output data of each of two or three or more of the reception devices, the information indicating the distance estimated based on the output data of each of two or three or more of the reception devices, and the information indicating the location of the above-described single transmitter.

According to another embodiment, in a case where the emission direction of the positioning signal 12 is unchanged, the fourth positioning section 546 may estimate the distance between the above-described single transmitter and the representative point of the lawn mower 210 based on a radio wave intensity of the positioning signal 12. The above-described locational relationship may be calculated based on the information indicating the reception direction indicated by the output data of each of two or three or more of the reception devices, the information indicating the distance estimated based on the output data of each of two or three or more of the reception devices, and the information indicating the location of the above-described single transmitter.

According to the present embodiment, the fifth positioning section 550 calculates (i) a relative locational relationship between at least one landmark 104 recognized by the landmark recognition section 522 and the lawn mower 210, and (ii) a relative locational relationship between each of at least one of the transmitters 106 recognized by the transmitter recognition section 542 and the lawn mower 210. The fifth estimation section 145 may calculate the above-described locational relationships by using a technique similar to at least one of the first estimation section 141, the second estimation section 142, the third estimation section 143, and the fourth estimation section 144. The fifth estimation section 145 may estimate the location of the lawn mower 210 based on the above-described locational relationships.

According to the present embodiment, the sensor information obtaining section 560 obtains the output data of the sensor unit 370. For example, the sensor information obtaining section 560 obtains information related to the GPS signal received by the GPS signal receiver included in the sensor unit 370. The sensor information obtaining section 560 obtains the output data of the internal sensor included in the sensor unit 370. As the internal sensor, the acceleration sensor, the gyro sensor, the wheel speed sensor, an ammeter configured to measure a current value of the travel motor 316, and the like are exemplified. The sensor information obtaining section 560 transmits the obtained information to the sixth positioning section 570.

According to the present embodiment, the sixth positioning section 570 estimates the location of the lawn mower 210 based on the output data of the sensor unit 370. The sixth positioning section 570 may also decide the positioning precision of the positioning based on the output data of the sensor unit 370. According to one embodiment, the sixth positioning section 570 estimates the location of the lawn mower 210 based on the information related to the GPS signal. According to another embodiment, the sixth positioning section 570 estimates the location of the lawn mower 210 based on the output data of the internal sensor.

For example, the sixth positioning section 570 calculates a relative locational relationship between a particular reference location and the lawn mower 210 based on the control amount of the travel motor 316 of the lawn mower 210. The particular reference location may be any point on the track of the lawn mower 210. The particular reference location may be a point on the track of the lawn mower 210 and also a point at which the positioning precision is equal to a predetermined threshold or is higher than the threshold. The sixth positioning section 570 may estimate the location of the lawn mower 210 based on the location information indicating the above-described location of the particular reference location and the information indicating the above-described relative locational relationship.

According to the present embodiment, the output section 580 outputs the information indicating the estimated location of the lawn mower 210. The positioning section 450 may also output information indicating the positioning precision of the location of the lawn mower 210. According to one embodiment, the output section 580 decides the location estimated by one of the first estimation section 141, the second estimation section 142, the third estimation section 143, the fourth estimation section 144, the fifth estimation section 145, and the sixth positioning section 570 as the estimated location of the lawn mower 210. According to another embodiment, the output section 580 decides the estimated location of the lawn mower 210 based on the locations estimated by at least two of the first estimation section 141, the second estimation section 142, the third estimation section 143, the fourth estimation section 144, the fifth estimation section 145, and the sixth positioning section 570.

For example, in a case where the positioning precision of the sixth positioning section 570 is equal to a predetermined threshold or is higher than the threshold, the output section 580 decides the location estimated by the sixth positioning section 570 as the estimated location of the lawn mower 210. The output section 580 may also decide the estimated location of the lawn mower 210 based on the location estimated by the sixth positioning section 570 and the location estimated by at least one of the first estimation section 141, the second estimation section 142, the third estimation section 143, the fourth estimation section 144, and the fifth estimation section 145.

On the other hand, in a case where the positioning precision of the sixth positioning section 570 is equal to a predetermined threshold or is lower than the threshold, the output section 580 decides the location estimated by one of the first estimation section 141, the second estimation section 142, the third estimation section 143, the fourth estimation section 144, and the fifth estimation section 145 as the estimated location of the lawn mower 210. The output section 580 may also decide the estimated location of the lawn mower 210 based on the locations estimated by at least two of the first estimation section 141, the second estimation section 142, the third estimation section 143, the fourth estimation section 144, the fifth estimation section 145, and the sixth positioning section 570.

According to the present embodiment, the output section 580 may output the information indicating that the defect has occurred in at least one of the structure 42, the structure 44, and the structure 46 or at least a part of one or more of the marks or patterns for the positioning which are disposed in these structures. For example, in a case where the landmark recognition section 522 does not recognize the landmark that should be recognized in the location of the lawn mower 210, the output section 580 detects that a defect occurs in a structure associated with the landmark among the structure 42, the structure 44, and the structure 46. In a case where the landmark recognition section 522 has recognized the landmark that should not be recognized in the location of the lawn mower 210, the output section 580 may also detect that a defect occurs in a structure associated with the landmark among the structure 42, the structure 44, and the structure 46.

The output section 580 may output the information indicating that the defect has occurred to at least one of the transmitter 62, the transmitter 64, and the transmitter 66. For example, in a case where the transmitter recognition section 542 does not recognize the positioning signal 12 that should be received in the location of the lawn mower 210, the output section 580 detects that a defect occurs in a transmitter associated with the positioning signal among the transmitter 62, the transmitter 64, and the transmitter 66. In a case where the transmitter recognition section 542 has recognized the positioning signal 12 that should not be received in the location of the lawn mower 210, the output section 580 may also detect that a defect occurs in a transmitter associated with the positioning signal among the transmitter 62, the transmitter 64, and the transmitter 66.

The output section 580 may also output information indicating the number of landmarks recognized by the landmark recognition section 522. The output section 580 may also output information indicating that the number of landmarks recognized by the landmark recognition section 522 satisfies a predetermined condition. The output section 580 may also output information indicating the number of transmitters recognized by the transmitter recognition section 542. The output section 580 may also output information indicating that the number of transmitters recognized by the transmitter recognition section 542 satisfies a predetermined condition.

FIG. 6 schematically illustrates one example of an internal configuration of the storage section 460. According to the present embodiment, the storage section 460 includes a map information storage section 612 and a history information storage section 614. According to the present embodiment, the map information storage section 612 stores map information related to the work region 202. According to the present embodiment, the history information storage section 614 stores information indicating the movement history of the lawn mower 210.

FIG. 7 schematically illustrates one example of an internal configuration of the management server 230. According to the present embodiment, the management server 230 includes a communication control section 710, a request processing section 720, a map information management section 730, an equipment management section 740, and a work plan management section 750.

According to the present embodiment, the communication control section 710 controls a communication with an external apparatus of the management server 230. The communication control section 710 may also be a communication interface compatible to one or a plurality of communication methods. As the external apparatus, the user terminal 22, the lawn mower 210, the charging station 220, and the like are exemplified. According to the present embodiment, the request processing section 720 accepts a request from an external apparatus. The request processing section 720 processes the request from the external apparatus.

According to the present embodiment, the map information management section 730 manages the map information. For example, the map information management section 730 executes processing such as generation, update, deletion, and search of the map information. The map information management section 730 may manage the map information related to the whole area of the work region 202. In response to a request from the storage section 460, the map information management section 730 may also extract the map information matched with the request and transmit the extracted map information to the storage section 460. For example, in response to the request from the storage section 460, the map information management section 730 transmits the map information in the surrounding of the current location of the lawn mower 210 to the storage section 460.

According to the present embodiment, the equipment management section 740 manages various types of devices constituting the management system 200. For example, the equipment management section 740 controls at least one of the lawn mower 210 and the charging station 220. The equipment management section 740 may also manage the information related to the various types of devices associated with the management system 200. For example, the equipment management section 740 manages the information related to at least one of the lawn mower 210 and the charging station 220. The equipment management section 740 may also manage the information related to the user terminal 22.

According to the present embodiment, the work plan management section 750 manages the schedule of the work to be performed by the lawn mower 210. The work plan management section 750 may plan the work schedule of the lawn mower 210. The work plan management section 750 may manage the progress of the work schedule of the lawn mower 210.

FIG. 8 schematically illustrates one example of a location estimation method. With reference to FIG. 8, one example of a method for estimating the location of the lawn mower 210 based on a single image in which a plurality of landmarks is captured will be described. In FIG. 8, for the sake of simplicity of descriptions, a case where the location of the lawn mower 210 is estimated based on a single image in which two landmarks are captured will be described. However, the number of landmarks included in the single image is not limited to the present embodiment. According to another embodiment, three or more landmarks may also be included in the single image. In addition, those skilled in the art can understand, in this case too, that the location of the lawn mower 210 is estimated by procedures similar to the present embodiment.

In addition, according to the present embodiment, for the sake of simplicity of descriptions, the location of the lawn mower 210 on the two-dimensional plane is estimated. However, the present embodiment is not limited to the case where the location on the two-dimensional plane is estimated. Those skilled in the art can understand that the location of the lawn mower 210 in the three-dimensional space may be estimated by extending the thought of the present embodiment to the three-dimensional space.

With reference to FIG. 8, one example of processing for deciding, from (i) a locational relationship 802 between a plurality of objects in the single image, (ii) a geographical locational relationship 804 between the lawn mower 210 and the plurality of objects will be described. In accordance with the present embodiment, a landmark 832 and a landmark 834 are included in an image 820 of the lawn mower 210 which is captured by the image capturing unit 364. The landmark 832 and the landmark 834 may also be structures independent from each other, or may also be different regions of a single structure. In the image 820, a degree of an angle defined by an optical axis 840 of the image capturing device that has captured the image 820 and the landmark 832 is θ₈₂. In addition, in the image 820, a degree of an angle defined by the optical axis 840 of the image capturing device that has captured the image 820 and the landmark 834 is θ₈₄.

Locations of the landmark 832 and the landmark 834 on the two-dimensional plane are already known. In view of the above, when a location is specified in which (i) the degree of the angle defined by the optical axis 840 of the image capturing device disposed in the lawn mower 210 and the landmark 832 becomes θ₈₂ and also (ii) the degree of the angle defined by the optical axis 840 of the image capturing device disposed in the lawn mower 210 and the landmark 834 becomes θ₈₄, a location 860 of the lawn mower 210 is estimated.

The image analysis section 520 may also estimate the location of the lawn mower 210 based on the information indicating the locational relationship 802 between the objects in the image, and other information related to the location of the lawn mower 210. As the other information related to the location of the lawn mower 210, positioning data having a relatively unsatisfactory positioning precision, data indicating a location estimated from the output of the internal sensor, data indicating the orientation or the bearing in which the image is captured, and the like are exemplified.

For example, in a case where data of the image 820 is associated with data indicating the orientation or the bearing in which the image 820 is captured, the image analysis section 520 analyzes the image 820 by using the data indicating the orientation or the bearing in which the image 820 is captured. For example, in a case where the image capturing orientation of the image 820 is south, it may be understood that the lawn mower 210 is located further on the north relative to the landmark on the north side among the landmark 832 and the landmark 834. Thus, load of the processing for estimating the location of the lawn mower 210 is considerably reduced.

FIG. 9 schematically illustrates one example of the location estimation method. With reference to FIG. 9, one example of a method for estimating the location of the lawn mower 210 based on a plurality of images in which the same landmark is captured will be described. In FIG. 9, for the sake of simplicity of descriptions, a case where the location of the lawn mower 210 is estimated based on two images in which the same landmark is captured will be described. However, the number of images in which the same landmark is captured is not limited to the present embodiment. According to another embodiment, three or more images in which the same landmark is captured may be used. In addition, those skilled in the art can understand, in this case too, that the location of the lawn mower 210 is estimated by procedures similar to the present embodiment.

In addition, according to the present embodiment, for the sake of simplicity of descriptions, the location of the lawn mower 210 on the two-dimensional plane is estimated. However, the present embodiment is not limited to a case where the location on the two-dimensional plane is estimated. Those skilled in the art can understand that the location of the lawn mower 210 in the three-dimensional space may be estimated by extending the thought of the present embodiment to the three-dimensional space.

With reference to FIG. 9, one example of processing for deciding, from (i) a locational relationship 902 of the single object in a plurality of images, (ii) a geographical locational relationship 904 between the lawn mower 210 and the object will be described. In accordance with the present embodiment, a landmark 930 is included in an image 922 captured by a first image capturing device 962 of the image capturing unit 364 of the lawn mower 210. Similarly, the landmark 930 is also included in an image 924 captured by a second image capturing device 964 of the image capturing unit 364 of the lawn mower 210. In the image 922, a degree of an angle defined by an optical axis 942 of the image capturing device 962 and the landmark 930 is θ₉₂. In addition, in the image 924, a degree of an angle defined by an optical axis 944 of the image capturing device 964 and the landmark 930 is θ₉₄.

The location of the landmark 930 on the two-dimensional plane is already known. In addition, the locational relationship between the image capturing device 962 and the image capturing device 964 is also already known. In view of the above, when a location is specified in which (i) the degree of angle defined by the optical axis 942 of the image capturing device 962 and the landmark 930 becomes θ₉₂, and also (ii) the degree of angle defined by the optical axis 944 of the image capturing device 964 and the landmark 930 becomes θ₉₄, the location of the lawn mower 210 is estimated.

The image analysis section 520 may also estimate the location of the lawn mower 210 based on the information indicating the locational relationship 902 between the objects in the image and the other information related to the location of the lawn mower 210. As the other information related to the location of the lawn mower 210, the positioning data having positioning relatively unsatisfactory precision, the data indicating the location estimated from the output of the internal sensor, the data indicating the orientation or the bearing in which the image is captured, and the like are exemplified.

For example, in a case where data of each of the image 922 and the image 924 is associated with the data indicating the orientation or the bearing in which each image is captured, the image analysis section 520 analyzes the image 922 and the image 924 by using the data indicating the orientation or the bearing in which each image is captured. For example, in a case where the image capturing orientation of the image 922 and the image 924 is south, it may be understood that the lawn mower 210 is located further on the north side relative to the landmark 930. Thus, the load of the processing for estimating the location of the lawn mower 210 is considerably reduced.

### EXPLANATION OF REFERENCES

10 signal, 12 positioning signal, 20 communication network, 22 user terminal, 42 structure, 44 structure, 46 structure, 62 transmitter, 64 transmitter, 66 transmitter, 102 region, 104 landmark, 106 transmitter, 110 moving object, 112 image capturing section, 114 reception section, 120 control apparatus, 130 information obtaining section, 140 location estimation section, 141 first estimation section, 142 second estimation section, 143 third estimation section, 144 fourth estimation section, 145 fifth estimation section, 200 management system, 202 work region, 210 lawn mower, 220 charging station, 230 management server, 302 enclosure, 312 front wheel, 314 rear wheel, 316 travel motor, 320 work unit, 322 blade disk, 324 cutter blade, 326 work motor, 328 shaft, 330 location adjustment section, 340 battery unit, 350 user interface, 364 image capturing unit, 366 reception unit, 370 sensor unit, 380 control unit, 410 communication control section, 420 travel control section, 430 work unit control section, 440 input and output control section, 450 positioning section, 460 storage section, 510 image capturing information obtaining section, 520 image analysis section, 522 landmark recognition section, 524 first positioning section, 526 second positioning section, 530 reception information obtaining section, 540 signal analysis section, 542 transmitter recognition section, 544 third positioning section, 546 fourth positioning section, 550 fifth positioning section, 560 sensor information obtaining section, 570 sixth positioning section, 580 output section, 612 map information storage section, 614 history information storage section, 710 communication control section, 720 request processing section, 730 map information management section, 740 equipment management section, 750 work plan management section, 802 locational relationship, 804 locational relationship, 820 image, 832 landmark, 834 landmark, 840 optical axis, 902 locational relationship, 904 locational relationship, 922 image, 924 image, 930 landmark, 942 optical axis, 944 optical axis, 962 image capturing device, 964 image capturing device

## Claims

1. A control apparatus (120) for controlling a moving object (110) having an autonomous movement function, the moving object (110) including (i) an image capturing section (112) configured to capture an image of at least one of one or more landmarks (104) disposed in a predetermined location, wherein the moving object may further include (ii) a reception section (114) configured to receive a signal from at least one of one or more transmitters (106) disposed in a predetermined location except for a transmitter disposed in a positioning satellite, comprising:
an information obtaining section (130) configured to obtain information related to an image (820, 922, 934) captured by the image capturing section (112), wherein the information obtaining section (112) may further obtain information related to the signal received by the reception section (114);
a location estimation section (140) configured to analyze the image captured by the image capturing section (112) and may be further configured to analyze the signal received by the reception section (114), and estimate a location of the moving object; and
a movement control section (420) configured to control a movement of the moving object (110);
wherein
the location estimation section (140) includes
a first estimation section (141) configured to calculate a relative locational relationship between at least two landmarks included in the image captured by the image capturing section and the moving object, and estimate the location of the moving object based on the relative locational relationship in a case where the information obtaining section (130) obtains the information related to the image captured by the image capturing section (112), or
a fifth estimation section (145) configured to calculate (i) a relative locational relationship between at least one landmark included in the image captured by the image capturing section and the moving object, and (ii) a relative locational relationship between at least one of transmitters that have respectively output at least one of signals received by the reception section and the moving object, and estimate the location of the moving object based on the relative locational relationships in a case where the information obtaining section (130) obtains the information related to the image captured by the image capturing section (112) and related to the signal received by the reception section (114),
wherein
the information related to the image includes information where data of the image is associated with data indicating an orientation or a bearing in which the image has been captured;
the first estimation section (141) and the fifth estimation section (145) estimate a location of the moving object (110) based on a location of the at least two landmarks or at least one landmark in the image and the orientation or
bearing in which the image, indicated by the information associated with the image, has been captured; and
the location estimation section (140) has a recognition section (522) configured to analyze the image captured by the image capturing section and recognize the at least two landmarks or at least one landmark or a part thereof existing in a surrounding of the moving object (110); and
**characterized in that**
(i) in a case where the control apparatus (120) comprises the first estimation section (141) and the number of landmarks recognized by the recognition section (522) is lower than a predetermined value or (ii) in a case where the control apparatus (120) comprises the fifth estimation section (145) and the number of landmarks recognized by the recognition section (522) is lower than a predetermined value,
the movement control section (420) is configured to refer to information stored in a movement history storage section (460) configured to store information indicating a movement history of the moving object (110) and is configured to control the movement of the moving object (110) such that the moving object progresses in a reverse direction of a track of the moving object based on an immediately preceding movement history of the moving object.

2. The control apparatus (120) according to Claim 1, further comprising:
a sensor control section (440) configured to control at least one of the image capturing section (112) and the reception section (114), wherein
the sensor control section (440)
(i) controls the image capturing section (112) such that a particular landmark among the one or more landmarks (104) is included in an angle of view even when the moving object (110) moves, or
(ii) controls the reception section such that a signal from a particular transmitter among the one or more transmitters is received even when the moving object moves in a case where the control apparatus (120) comprises the fifth estimation section (145) and the moving objection (110) includes reception section (114).

3. The control apparatus (120) according to Claim 2, wherein
the sensor control section (440)
(i) sets, in a case where two or more landmarks are included in the image captured by the image capturing section (112) , one of the two or more landmarks as the particular landmark, or
(ii) sets, when the reception section receives signals from two or more transmitters, one of the two or more transmitters as the particular transmitter in a case where the control apparatus (120) comprises the fifth estimation section (145) and the moving objection (110) includes reception section (114).

4. The control apparatus (120) according to Claim 3, wherein
the sensor control section (440)
(i) sets, in a case where at least one of a location and a size of the particular landmark in the image captured by the image capturing section (112) satisfies a predetermined condition, another landmark included in the image as the particular landmark for a next time, or
(ii) sets, when an intensity of a signal from the particular transmitter satisfies a predetermined condition, another transmitter a signal of which is received by the reception section as the particular landmark for a next time in a case where the control apparatus (120) comprises the fifth estimation section (145) and the moving objection (110) includes reception section (114).

5. The control apparatus according to any one of Claims 1-4, further comprising:
an operation mode control section (430) configured to control an operation mode of the moving object (110), wherein
(a) in a case where the control apparatus (120) comprises the first estimation section (141) and (i) a predetermined period of time elapses or (ii) a movement distance of the moving object satisfies a predetermined condition, after the number of landmarks recognized by the recognition section (522) becomes lower than the predetermined value, or
(b) in a case where the control apparatus (120) comprises the fifth estimation section (145) and (i) a predetermined period of time elapses or (ii) a movement distance of the moving object satisfies a predetermined condition, after the number of landmarks or transmitters recognized by the recognition section (522) becomes lower than the predetermined value,
the operation mode control section (430) sets the operation mode of the moving object as a predetermined operation mode.

6. The control apparatus (120) according to any one of Claims 1-4, wherein
the moving object (110) is a working machinery (210), and
the control apparatus (120) further comprises: a work mode control section (430) configured to control a work mode of the working machinery (210); wherein
(a) in a case where the control apparatus (120) comprises the first estimation section (141) and (i) a predetermined period of time elapses or (ii) a movement distance of the moving object satisfies a predetermined condition, after the number of landmarks recognized by the recognition section (522) becomes lower than the predetermined value, or
(b) in a case where the control apparatus (120) comprises the fifth estimation section (145) and (i) a predetermined period of time elapses or (ii) a movement distance of the moving object satisfies a predetermined condition, after the number of landmarks recognized by the recognition section (522) becomes lower than the predetermined value,
the work mode control section (430) sets the work mode of the moving object as a work mode having a lower work intensity of the work than the current work mode.

7. The control apparatus (120) according to any one of Claims 1-6, further comprising:
a recognition section (522, 542) configured to recognize a landmark or parts of the landmark existing in a surrounding of the moving object among the one or more landmarks (104) or the one or more transmitters (106);
an output section (580) configured to output information indicating that a defect has occurred in at least one of the one or more landmarks (104) and the one or more transmitters (106).

8. A program for causing a computer to function as the control apparatus (120) according to any one of Claims 1 to 7.

9. A moving object (110) that autonomously moves, comprising:
the control apparatus (120) according to any one of Claims 1 to 7; and
at least the image capturing section (112) among the image capturing section (112) and the reception section (114).

10. The moving object (110) according to Claim 9, wherein
the image capturing section (112)
(i) has a plurality of image capturing devices configured to capture images in different directions,
(ii) is supported to a rotatable supporting portion, or
(iii) captures an image of an object via an optical system at least partially including a member configured to be rotatable.

11. The moving object according to Claim 9 or 10, wherein
the reception section (114)
(i) has a plurality of reception devices, each of the reception devices having directivity and being disposed such that a signal from a different direction is received,
(ii) is supported to a rotatable supporting portion, or
(iii) receives the signal via a waveguide section at least partially including a member configured to be rotatable.

12. A control method for controlling a moving object (110) having an autonomous movement function, wherein the moving object (110) includes (i) an image capturing section (112) configured to capture an image of at least one of one or more landmarks (104) disposed in a predetermined location, and the moving object may further include (ii) a reception section (114) configured to receive a signal from at least one of one or more transmitters (106) disposed in a predetermined location except for a transmitter disposed in a positioning satellite,
the control method further comprises:
obtaining information related to an image (820, 922, 934) captured by the image capturing section (112), wherein the obtaining information may further obtain information related to the signal received by the reception section (114);
analyzing the image captured by the image capturing section (112) and may further analyze the signal received by the reception section (114) and estimating a location of the moving object; and
controlling a movement of the moving object (110);
wherein
the estimating the location includes
a first estimation step of calculating a relative locational relationship between at least two landmarks included in the image captured by the image capturing section (112) and the moving object, and estimating the location of the moving object based on the relative locational relationship in a case where the obtaining the information obtains the information related to the image captured by the image capturing section (112), or
a fifth estimation step of calculating (i) a relative locational relationship between at least one landmark included in the image captured by the image capturing section (112) and the moving object and (ii) a relative locational relationship between at least one of transmitters (106) that have respectively output at least one of signals received by the reception section (114) and the moving object (110) and estimating the location of the moving object based on the relative locational relationships in a case where the information obtaining section (130) obtains the information related to the image captured by the image capturing section (112) and related to the signal received by the reception section (114),
wherein
the information related to the image includes information where data of the image is associated with data indicating an orientation or a bearing in which the image has been captured;
the first estimation step and the fifth estimation step include: estimating a location of the moving object (110) based on a location of the at least two landmarks or at least one landmark in the image and the orientation or bearing in which the image, indicated by the information associated with the image, has been captured; and
the estimating the location includes: analyzing the image captured by the image capturing section and recognizing the at least two landmarks or at least one landmark or a part of the landmark existing in a surrounding of the moving object (110); and
**characterized in that**
(i) in a case where the control method comprises the first estimation step and the number of landmarks recognized in the recognizing is lower than a predetermined value or (ii) in a case where the control method comprises the fifth estimation step and the number of landmarks recognized in the recognizing is lower than a predetermined value,
the controlling the movement includes:
referring to information stored in a movement history storage section (460) configured to store information indicating a movement history of the moving object (110) and
controlling the movement of the moving object (110) such that the moving object progresses in a reverse direction of a track of the moving object based on an immediately preceding movement history of the moving object.

## Patentansprüche

1. Steuerapparat (120) zum Steuern eines beweglichen Objekts (110), das eine autonome Bewegungsfunktion aufweist, das bewegliche Objekt (110) umfassend (i) einen Bilderfassungsabschnitt (112), der dazu eingerichtet ist, ein Bild von wenigstens einem aus einem oder mehreren an einem vorbestimmten Ort angeordneten Wahrzeichen (104) zu erfassen, wobei das bewegliche Objekt ferner umfassen kann (ii) einen Empfangsabschnitt (114), der dazu eingerichtet ist, ein Signal von wenigstens einem aus einem oder mehreren an einem vorbestimmten Ort angeordneten Sendern (106) zu empfangen, außer von einem Sender, der in einem Positionierungssatelliten angeordnet ist, umfassend:
einen Informationserhaltungsabschnitt (130), der dazu eingerichtet ist, Informationen bezüglich eines von dem Bilderfassungsabschnitt (112) erfassten Bilds (820, 922, 934) zu erhalten, wobei der Informationserhaltungsabschnitt (112) ferner Informationen bezüglich des von dem Empfangsabschnitt (114) empfangenen Signals erhalten kann;
einen Ortschätzabschnitt (140), der dazu eingerichtet ist, das von dem Bilderfassungsabschnitt (112) erfasste Bild zu analysieren, und ferner dazu eingerichtet sein kann, das von dem Empfangsabschnitt (114) empfangene Signal zu analysieren, und einen Ort des beweglichen Objekts zu schätzen; und
einen Bewegungssteuerabschnitt (420), der dazu eingerichtet ist, eine Bewegung des beweglichen Objekts (110) zu steuern;
wobei der Ortschätzabschnitt (140)
einen ersten Schätzabschnitt (141), der dazu eingerichtet ist, eine relative örtliche Beziehung zwischen wenigstens zwei Wahrzeichen, die in dem von dem Bilderfassungsabschnitt erfassten Bild umfasst sind, und dem beweglichen Objekt zu berechnen, und den Ort des beweglichen Objekts basierend auf der relativen örtlichen Beziehung in einem Fall zu schätzen, bei dem der Informationserhaltungsabschnitt (130) die Informationen bezüglich des von dem Bilderfassungsabschnitt (112) erfassten Bilds erhält, oder
einen fünften Schätzabschnitt (145) umfasst, der dazu eingerichtet ist, (i) eine relative örtliche Beziehung zwischen wenigstens einem Wahrzeichen, das in dem von dem Bilderfassungsabschnitt erfassten Bild umfasst ist, und dem beweglichen Objekt, und (ii) eine relative örtliche Beziehung zwischen wenigstens einem der Sender, die jeweils wenigstens eines der von dem Empfangsabschnitt empfangenen Signale ausgegeben haben, und dem beweglichen Objekt zu berechnen, und den Ort des beweglichen Objekts basierend auf den relativen örtlichen Beziehungen, in einem Fall zu schätzen, bei dem der Informationserhaltungsabschnitt (130) die Informationen bezüglich des von dem Bilderfassungsabschnitt (112) erfassten Bilds und bezüglich des von dem Empfangsabschnitt (114) empfangenen Signals erhält,
wobei
die Informationen bezüglich des Bildes Informationen umfassen, bei denen Daten des Bildes Daten zugeordnet sind, die eine Orientierung oder eine Lage, in der das Bild erfasst wurde, angeben;
der erste Schätzabschnitt (141) und der fünfte Schätzabschnitt (145) einen Ort des beweglichen Objekts (110) schätzen, basierend auf einem Ort von den wenigstens zwei Wahrzeichen oder von wenigstens einem Wahrzeichen in dem Bild und der durch die dem Bild zugeordneten Informationen angegebene Orientierung oder Lage, in welcher das Bild erfasst wurde; und
der Ortschätzabschnitt (140) einen Erkennungsabschnitt (522) aufweist, der dazu eingerichtet ist, das von dem Bilderfassungsabschnitt erfasste Bild zu analysieren und die wenigstens zwei Wahrzeichen oder wenigstens ein Wahrzeichen oder einen Teil davon, die/das/der in einer Umgebung des beweglichen Objekts (110) existieren/existiert, zu erkennen; und
**dadurch gekennzeichnet ist, dass**
(i) in einem Fall, bei dem der Steuerapparat (120) den ersten Schätzabschnitt (141) umfasst und die Anzahl der von dem Erkennungsabschnitt (522) erkannten Wahrzeichen kleiner ist als ein vorbestimmter Wert oder (ii) in einem Fall, bei dem der Steuerapparat (120) den fünften Schätzabschnitt (145) umfasst und die Anzahl der von dem Erkennungsabschnitt (522) erkannten Wahrzeichen kleiner ist als ein vorbestimmter Wert,
der Bewegungssteuerabschnitt (420) dazu eingerichtet ist, sich auf Informationen zu beziehen, die in einem Bewegung-Historien-Speicher-Abschnitt (460) gespeichert sind, der dazu eingerichtet ist, Informationen zu speichern, die eine Bewegungshistorie des beweglichen Objekts (110) anzeigen und dazu eingerichtet ist, die Bewegung des beweglichen Objekts (110) derart zu steuern, dass sich das bewegliche Objekt in einer umgekehrten Richtung einer Spur des beweglichen Objekts basierend auf einer unmittelbar vorangehenden Bewegungshistorie des beweglichen Objekts fortbewegt.

2. Steuerapparat (120) nach Anspruch 1, ferner umfassend:
einen Sensorsteuerabschnitt (440), der dazu eingerichtet ist, wenigstens einen aus dem Bilderfassungsabschnitt (112) und dem Empfangsabschnitt (114) zu steuern, wobei
der Sensorsteuerabschnitt (440)
(i) den Bilderfassungsabschnitt (112) derart steuert, dass ein bestimmtes Wahrzeichen aus dem einen oder mehreren Wahrzeichen (104) in einem Blickwinkel umfasst ist, sogar, wenn sich das bewegliche Objekt (110) bewegt, oder
(ii) den Empfangsabschnitt derart steuert, dass ein Signal von einem bestimmten Sender aus dem einen oder den mehreren Sendern empfangen wird, sogar, wenn sich das bewegliche Objekt bewegt, in einem Fall, bei dem der Steuerapparat (120) den fünften Schätzabschnitt (145) umfasst und das bewegliche Objekt (110) einen Empfangsabschnitt (114) umfasst.

3. Steuerapparat (120) nach Anspruch 2, wobei
der Sensorsteuerabschnitt (440)
(i) in einem Fall, bei dem zwei oder mehr Wahrzeichen in dem von dem Bilderfassungsabschnitt (112) erfassten Bild umfasst sind, eines der zwei oder mehr Wahrzeichen als das spezifische Wahrzeichen festlegt, oder
(ii) wenn der Empfangsabschnitt Signale von zwei oder mehr Sendern erfasst, einen der zwei oder mehr Sender als den spezifischen Sender festlegt, in einem Fall, bei dem der Steuerapparat (120) den fünften Schätzabschnitt (145) umfasst und das bewegliche Objekt (110) einen Empfangsabschnitt (114) umfasst.

4. Steuerapparat (120) nach Anspruch 3, wobei
der Sensorsteuerabschnitt (440)
(i) in einem Fall, bei dem wenigstens eines aus einem Ort und einer Größe des spezifischen Wahrzeichens in dem von der dem Bilderfassungsabschnitt (112) erfassten Bild eine vorbestimmte Bedingung erfüllt, ein anderes in dem Bild umfasstes Wahrzeichen als das spezifische Wahrzeichen für ein nächstes Mal festlegt, oder
(ii) wenn eine Intensität eines Signals von dem spezifischen Sender eine vorbestimmte Bedingung erfüllt, einen anderen Sender, von dem ein Signal von dem Empfangsabschnitt empfangen wird, als das spezifische Wahrzeichen für ein nächstes Mal festlegt, in einem Fall, bei dem der Steuerapparat (120) den fünften Schätzabschnitt (145) umfasst und das bewegliche Objekt (110) einen Empfangsabschnitt (114) umfasst.

5. Steuerapparat nach einem der Ansprüche 1 bis 4, ferner umfassend:
einen Betriebsmodus-Steuerabschnitt (430), der dazu eingerichtet ist, einen Betriebsmodus des beweglichen Objekts (110) zu steuern, wobei
(a) in einem Fall, bei dem der Steuerapparat (120) den ersten Schätzabschnitt (141) umfasst und (i) eine vorbestimmte Zeitspanne verstreicht oder (ii) eine Bewegungsdistanz des beweglichen Objekts eine vorbestimmte Bedingung erfüllt, nachdem die Anzahl der von dem Erkennungsabschnitt (522) erfassten Wahrzeichen geringer wird als der vorbestimmte Wert, oder
(b) in einem Fall, bei dem der Steuerapparat (120) den fünften Schätzabschnitt (145) umfasst und (i) eine vorbestimmte Zeitspanne verstreicht oder (ii) eine Bewegungsdistanz des beweglichen Objekts eine vorbestimmte Bedingung erfüllt, nachdem die Anzahl der von dem Erkennungsabschnitt (522) erkannten Wahrzeichen oder Sender geringer wird als der vorbestimmte Wert,
der Betriebsmodus-Steuerabschnitt (430) den Betriebsmodus des beweglichen Objekts als einen vorbestimmten Betriebsmodus festlegt.

6. Steuerapparat (120) nach einem der Ansprüche 1 bis 4, wobei das bewegliche Objekt (110) eine Arbeitsmaschine (210) ist, und
der Steuerapparat (120) ferner umfasst: einen Arbeitsmodus-Steuerabschnitt (430), der dazu eingerichtet ist, einen Arbeitsmodus der Arbeitsmaschine (210) zu steuern; wobei
(a) in einem Fall, bei dem der Steuerapparat (120) den ersten Schätzabschnitt (141) umfasst, und (i) eine vorbestimmte Zeitspanne verstreicht oder (ii) eine Bewegungsdistanz des beweglichen Objekts eine vorbestimmte Bedingung erfüllt, nachdem die Anzahl der von der dem Erkennungsabschnitt (522) erkannten Wahrzeichen geringer wird als der vorbestimmte Wert, oder
(b) in einem Fall, bei dem der Steuerapparat (120) den fünften Schätzabschnitt (145) umfasst und (i) eine vorbestimmte Zeitspanne verstreicht oder (ii) eine Bewegungsdistanz des beweglichen Objekts eine vorbestimmte Bedingung erfüllt, nachdem die Anzahl der von dem Erkennungsabschnitt (522) erkannten Wahrzeichen geringer wird als der vorbestimmte Wert,
der Arbeitsmodus-Steuerabschnitt (430) den Arbeitsmodus des beweglichen Objekts als einen Arbeitsmodus, der eine geringere Arbeitsintensität der Arbeit aufweist als der aktuelle Arbeitsmodus, festlegt.

7. Steuerapparat (120) nach einem der Ansprüche 1 bis 6, ferner umfassend:
einen Erkennungsabschnitt (522, 542), der dazu eingerichtet ist, ein Wahrzeichen oder Teile des Wahrzeichens, das in einer Umgebung des beweglichen Objekts existiert, aus dem einen oder den mehreren Wahrzeichen (104) oder dem einen oder den mehreren Sendern (106) zu erkennen;
einen Ausgabeabschnitt (580), der dazu eingerichtet ist, Informationen auszugeben, die anzeigen, dass ein Fehler bei wenigstens einem aus dem einen oder den mehreren Wahrzeichen (104) und dem einen oder den mehreren Sendern (106) aufgetreten ist.

8. Programm, um einen Computer zu veranlassen, als Steuerapparat (120) nach einem der Ansprüche 1 bis 7 zu fungieren.

9. Bewegliches Objekt (110), das sich autonom bewegt, umfassend:
den Steuerapparat (120) nach einem der Ansprüche 1 bis 7; und
wenigstens den Bilderfassungsabschnitt (112) aus dem Bilderfassungsabschnitt (112) und dem Erkennungsabschnitt (114).

10. Bewegliches Objekt (110) nach Anspruch 9, wobei der Bilderfassungsabschnitt (112)
(i) eine Mehrzahl von Bilderfassungsvorrichtungen aufweist, die dazu eingerichtet sind, Bilder in unterschiedlichen Richtungen zu erfassen,
(ii) an einem drehbaren Stützabschnitt gestützt ist, oder
(iii) ein Bild von einem Objekt über ein optisches System erfasst, welches wenigstens teilweise ein Element umfasst, das dazu eingerichtet ist, drehbar zu sein.

11. Bewegliches Objekt nach Anspruch 9 oder 10, wobei der Erkennungsabschnitt (114)
(i) eine Mehrzahl von Erkennungsvorrichtungen aufweist, wobei jede der Erkennungsvorrichtungen eine Richtcharakteristik aufweist und derart angeordnet ist, dass ein Signal aus einer unterschiedlichen Richtung empfangen wird,
(ii) an einem drehbaren Stützabschnitt gestützt ist, oder
(iii) das Signal über einen Wellenleiterabschnitt empfängt, der wenigstens teilweise ein Element umfasst, das dazu eingerichtet ist, drehbar zu sein.

12. Steuerverfahren zum Steuern eines beweglichen Objekts (110), das eine autonome Bewegungsfunktion aufweist, wobei das bewegliche Objekt (110) (i) einen Bilderfassungsabschnitt (112) umfasst, der dazu eingerichtet ist, ein Bild von wenigstens einem aus einem oder mehreren an einem vorbestimmten Ort angeordneten Wahrzeichen (104) zu erfassen, und das bewegliche Objekt ferner (ii) einen Empfangsabschnitt (114) umfassen kann, der dazu eingerichtet ist, ein Signal von wenigstens einem aus einem oder mehreren an einem vorbestimmten Ort angeordneten Sendern (106) zu empfangen, außer von einem Sender, der in einem Positionierungssatelliten angeordnet ist,
wobei das Steuerverfahren ferner umfasst:
Informationserhaltung bezüglich eines von dem Bilderfassungsabschnitt (112) erfassten Bilds (820, 922, 934), wobei die Informationserhaltung ferner Informationen bezüglich des von dem Empfangsabschnitt (114) empfangenen Signals erhalten kann;
Analysieren des von dem Bilderfassungsabschnitt (112) erfassten Bilds und ferner kann das von dem Empfangsabschnitt (114) empfangene Signal analysiert werden und Schätzen eines Orts des beweglichen Objekts; und
Steuern einer Bewegung des beweglichen Objekts (110);
wobei das Schätzen des Orts
einen ersten Schätzschritt eines Berechnens einer relativen örtlichen Beziehung zwischen wenigstens zwei Wahrzeichen, die in dem von dem Bilderfassungsabschnitt (112) erfassten Bild umfasst werden, und dem beweglichen Objekt, und Schätzen des Orts des beweglichen Objekts basierend auf der relativen örtlichen Beziehung in einem Fall, bei dem die Informationserhaltung die Informationen bezüglich des von dem Bilderfassungsabschnitt (112) erfassten Bilds erhält, oder
einen fünften Schätzschritt eines Berechnens (i) einer relativen örtlichen Beziehung zwischen wenigstens einem Wahrzeichen umfasst, das in dem von dem Bilderfassungsabschnitt (112) erfassten Bild umfasst wird, und dem beweglichen Objekt, und (ii) einer relativen örtlichen Beziehung zwischen wenigstens einem von Sendern (106), die jeweils wenigstens eines der von dem Empfangsabschnitt (114) empfangenen Signale ausgegeben haben, und dem beweglichen Objekt (110), und Schätzen des Orts des beweglichen Objekts basierend auf den relativen örtlichen Beziehungen, in einem Fall, bei dem der Informationserhaltungsabschnitt (130) die Informationen bezüglich des von dem Bilderfassungsabschnitt (112) erfassten Bilds und bezüglich des von dem Empfangsabschnitt (114) empfangenen Signals erhält,
wobei
die Informationen bezüglich des Bildes Informationen umfassen, bei denen Daten des Bildes Daten zugeordnet werden, die eine Orientierung oder eine Lage, in der das Bild erfasst wurde, angeben;
der erste Schätzschritt und der fünfte Schätzschritt umfassen: Schätzen eines Orts des beweglichen Objekts (110) basierend auf einem Ort von den wenigstens zwei Wahrzeichen oder von wenigstens einem Wahrzeichen in dem Bild und der durch die dem Bild zugeordneten Informationen angegebene Orientierung oder Lage, in welcher das Bild erfasst wurde; und
das Schätzen des Orts umfasst: Analysieren des von dem Bilderfassungsabschnitt erfassten Bilds und Erkennen der wenigstens zwei Wahrzeichen oder wenigstens eines Wahrzeichens oder eines Teils des Wahrzeichens, die/das in einer Umgebung des beweglichen Objekts (110) existieren/existiert; und
**dadurch gekennzeichnet ist, dass**
(i) in einem Fall, bei dem das Steuerverfahren den ersten Schätzschritt umfasst und die Anzahl der bei dem Erkennen erkannten Wahrzeichen kleiner ist als ein vorbestimmter Wert oder (ii) in einem Fall, bei dem das Steuerverfahren den fünften Schätzschritt umfasst und die Anzahl der bei dem Erkennen erkannten Wahrzeichen kleiner ist als ein vorbestimmter Wert,
das Steuern der Bewegung umfasst:
sich Beziehen auf Informationen, die in einem Bewegung-Historien-Speicher-Abschnitt (460) gespeichert werden, der dazu eingerichtet ist, Informationen zu speichern, die eine Bewegungshistorie des beweglichen Objekts (110) anzeigen und
Steuern der Bewegung des beweglichen Objekts (110) derart, dass sich das bewegliche Objekt in einer umgekehrten Richtung einer Spur des beweglichen Objekts basierend auf einer unmittelbar vorangehenden Bewegungshistorie des beweglichen Objekts fortbewegt.

## Revendications

1. Appareil de commande (120) pour commander un objet mobile (110) ayant une fonction de déplacement autonome, l'objet mobile (110) comprenant (i) une section de capture d'images (112) configurée pour capturer une image d'au moins un d'un ou plusieurs points de repère (104) disposés dans un emplacement prédéterminé, dans lequel l'objet mobile peut en outre comprendre (ii) une section de réception (114) configurée pour recevoir un signal d'au moins un d'un ou plusieurs émetteurs (106) disposés dans un emplacement prédéterminé sauf un émetteur disposé dans un satellite de positionnement, comprenant :
une section d'obtention d'informations (130) configurée pour obtenir des informations liées à une image (820, 922, 934) capturée par la section de capture d'images (112), dans lequel la section d'obtention d'informations (112) peut en outre obtenir des informations liées au signal reçu par la section de réception (114) ;
une section d'estimation d'emplacement (140) configurée pour analyser l'image capturée par la section de capture d'images (112) et pouvant être en outre configurée pour analyser le signal reçu par la section de réception (114) et estimer un emplacement de l'objet mobile ; et
une section de commande de déplacement (420) configurée pour commander un déplacement de l'objet mobile (110) ;
dans lequel
la section d'estimation d'emplacement (140) comprend
une première section d'estimation (141) configurée pour calculer une relation de localisation relative entre au moins deux points de repère compris dans l'image capturée par la section de capture d'images et l'objet mobile, et estimer l'emplacement de l'objet mobile sur la base de la relation de localisation relative dans un cas où la section d'obtention d'informations (130) obtient les informations liées à l'image capturée par la section de capture d'images (112), ou
une cinquième section d'estimation (145) configurée pour calculer (i) une relation de localisation relative entre au moins un point de repère compris dans l'image capturée par la section de capture d'images et l'objet mobile, et (ii) une relation de localisation relative entre au moins un des émetteurs qui ont délivré respectivement au moins un des signaux reçus par la section de réception et l'objet mobile, et estimer l'emplacement de l'objet mobile sur la base des relations de localisation relatives dans un cas où la section d'obtention d'informations (130) obtient les informations liées à l'image capturée par la section de capture d'images (112) et liées au signal reçu par la section de réception (114),
dans lequel
les informations liées à l'image comprennent des informations où des données de l'image sont associées à des données indiquant une orientation ou une position dans laquelle l'image a été capturée ;
la première section d'estimation (141) et la cinquième section d'estimation (145) estiment un emplacement de l'objet mobile (110) sur la base d'un emplacement des au moins deux points de repère ou de l'au moins un point de repère dans l'image et de l'orientation ou de la position dans laquelle a été capturée l'image indiquée par les informations associées à l'image ; et
la section d'estimation d'emplacement (140) a une section de reconnaissance (522) configurée pour analyser l'image capturée par la section de capture d'images et reconnaître les au moins deux points de repère ou l'au moins un point de repère ou une partie de celui-ci se trouvant dans un entourage de l'objet mobile (110) ; et
**caractérisé en ce que**
(i) dans un cas où l'appareil de commande (120) comprend la première section d'estimation (141) et où le nombre de points de repère reconnus par la section de reconnaissance (522) est inférieur à une valeur prédéterminée ou (ii) dans un cas où l'appareil de commande (120) comprend la cinquième section d'estimation (145) et où le nombre de points de repère reconnus par la section de reconnaissance (522) est inférieur à une valeur prédéterminée,
la section de commande de déplacement (420) est configurée pour consulter des informations stockées dans une section de stockage d'historique de déplacement (460) configurée pour stocker des informations indiquant un historique de déplacement de l'objet mobile (110), et est configurée pour commander le déplacement de l'objet mobile (110) de sorte que l'objet mobile évolue dans une direction inverse d'une piste de l'objet mobile sur la base d'un historique de déplacement immédiatement précédent de l'objet mobile.

2. Appareil de commande (120) selon la revendication 1, comprenant en outre :
une section de commande de capteur (440) configurée pour commander au moins une parmi la section de capture d'images (112) et la section de réception (114), dans lequel
la section de commande de capteur (440)
(i) commande la section de capture d'images (112) de sorte qu'un point de repère particulier parmi les un ou plusieurs points de repère (104) soit compris dans un angle de vue même lorsque l'objet mobile (110) se déplace, ou
(ii) commande la section de réception de sorte qu'un signal provenant d'un émetteur particulier parmi les un ou plusieurs émetteurs soit reçu même lorsque l'objet mobile se déplace dans un cas où l'appareil de commande (120) comprend la cinquième section d'estimation (145) et où l'objet mobile (110) comprend une section de réception (114).

3. Appareil de commande (120) selon la revendication 2, dans lequel la section de commande de capteur (440)
(i) définit, dans un cas où deux points de repère ou plus sont compris dans l'image capturée par la section de capture d'images (112), un des deux points de repère ou plus comme point de repère particulier, ou
(ii) définit, lorsque la section de réception reçoit des signaux des deux émetteurs ou plus, un des deux émetteurs ou plus comme émetteur particulier dans un cas où l'appareil de commande (120) comprend la cinquième section d'estimation (145) et où l'objet mobile (110) comprend une section de réception (114).

4. Appareil de commande (120) selon la revendication 3, dans lequel
la section de commande de capteur (440)
(i) définit, dans un cas où au moins un parmi un emplacement et une taille du point de repère particulier dans l'image capturée par la section de capture d'images (112) satisfait une condition prédéterminée, un autre point de repère compris dans l'image comme point de repère particulier pour une prochaine fois, ou
(ii) définit, lorsqu'une intensité d'un signal provenant de l'émetteur particulier satisfait une condition prédéterminée, un autre émetteur dont un signal est reçu par la section de réception comme point de repère particulier pour une prochaine fois dans un cas où l'appareil de commande (120) comprend la cinquième section d'estimation (145) et où l'objet mobile (110) comprend la section de réception (114).

5. Appareil de commande selon l'une quelconque des revendications 1 à 4, comprenant en outre :
une section de commande de mode de fonctionnement (430) configurée pour commander un mode de fonctionnement de l'objet mobile (110), dans lequel
(a) dans un cas où l'appareil de commande (120) comprend la première section d'estimation (141) et (i) où une période de temps prédéterminée s'écoule ou (ii) où une distance de déplacement de l'objet mobile satisfait une condition prédéterminée, après que le nombre de points de repère reconnus par la section de reconnaissance (522) est devenu inférieur à la valeur prédéterminée, ou
(b) dans un cas où l'appareil de commande (120) comprend la cinquième section d'estimation (145) et (i) où une période de temps prédéterminée s'écoule ou (ii) où une distance de déplacement de l'objet mobile satisfait une condition prédéterminée, après que le nombre de points de repère ou d'émetteurs reconnus par la section de reconnaissance (522) est devenu inférieur à la valeur prédéterminée,
la section de commande de mode de fonctionnement (430) définit le mode de fonctionnement de l'objet mobile comme un mode de fonctionnement prédéterminé.

6. Appareil de commande (120) selon l'une quelconque des revendications 1 à 4, dans lequel
l'objet mobile (110) est une machine de travail (210), et
l'appareil de commande (120) comprend en outre : une section de commande de mode de travail (430) configurée pour commander un mode de travail de la machine de travail (210) ; dans lequel
(a) dans un où l'appareil de commande (120) comprend la première section d'estimation (141) et (i) où une période de temps prédéterminée s'écoule ou (ii) où une distance de déplacement de l'objet mobile satisfait une condition prédéterminée, après que le nombre de points de repère reconnus par la section de reconnaissance (522) est devenu inférieur à la valeur prédéterminée, ou
(b) dans un cas où l'appareil de commande (120) comprend la cinquième section d'estimation (145) et (i) où une période de temps prédéterminée s'écoule ou (ii) où une distance de déplacement de l'objet mobile satisfait une condition prédéterminée, après que le nombre de points de repère reconnus par la section de reconnaissance (522) est devenu inférieur à la valeur prédéterminée,
la section de commande de mode de travail (430) définit le mode de travail de l'objet mobile comme un mode de travail ayant une intensité de travail du travail inférieure au mode de travail actuel.

7. Appareil de commande (120) selon l'une quelconque des revendications 1 à 6, comprenant en outre :
une section de reconnaissance (522, 542) configurée pour reconnaître un point de repère ou des parties du point de repère se trouvant dans un entourage de l'objet mobile parmi les un ou plusieurs points de repère (104) ou les un ou plusieurs émetteurs (106) ;
une section de sortie (580) configurée pour délivrer des informations indiquant qu'un défaut s'est produit dans au moins un des un ou plusieurs points de repère (104) et des un ou plusieurs émetteurs (106).

8. Programme pour amener un ordinateur à fonctionner comme l'appareil de commande (120) selon l'une des revendications 1 à 7.

9. Objet mobile (110) qui se déplace de manière autonome, comprenant :
l'appareil de commande (120) selon l'une quelconque des revendications 1 à 7 ; et
au moins la section de capture d'images (112) parmi la section de capture d'images (112) et la section de réception (114).

10. Objet mobile (110) selon la revendication 9, dans lequel
la section de capture d'images (112)
(i) a une pluralité de dispositifs de capture d'image configurés pour capturer des images dans différentes directions,
(ii) est supportée dans une partie de support rotative, ou
(iii) capture une image d'un objet via un système optique comprenant au moins partiellement un élément configuré pour pouvoir tourner.

11. Objet mobile selon la revendication 9 ou 10, dans lequel la section de réception (114)
(i) a une pluralité de dispositifs de réception, chacun des dispositifs de réception ayant une caractéristique directive et étant disposé de sorte qu'un signal provenant d'une direction différente soit reçu,
(ii) est supportée dans une partie de support rotative, ou
(iii) reçoit le signal via une section de guide d'ondes comprenant au moins partiellement un élément configuré pour pouvoir tourner.

12. Procédé de commande pour commander un objet mobile (110) ayant une fonction de déplacement autonome, dans lequel l'objet mobile (110) comprend (i) une section de capture d'images (112) configurée pour capturer une image d'au moins un d'un ou plusieurs points de repère (104) disposés dans un emplacement prédéterminé, et l'objet mobile peut en outre comprendre (ii) une section de réception (114) configurée pour recevoir un signal d'au moins un d'un ou plusieurs émetteurs (106) disposés dans un emplacement prédéterminé sauf un émetteur disposé dans un satellite de positionnement,
le procédé de commande comprend en outre :
l'obtention d'informations liées à une image (820, 922, 934) capturée par la section de capture d'images (112), dans lequel l'obtention d'informations peut en outre obtenir des informations liées au signal reçu par la section de réception (114) ;
l'analyse de l'image capturée par la section de capture d'images (112) et l'analyse éventuelle, en outre, du signal reçu par la section de réception (114) et l'estimation d'un emplacement de l'objet mobile ; et
la commande d'un déplacement de l'objet mobile (110) ;
dans lequel
l'estimation de l'emplacement comprend
une première étape d'estimation consistant à calculer une relation de localisation relative entre au moins deux points de repère compris dans l'image capturée par la section de capture d'images (112) et l'objet mobile, et à estimer l'emplacement de l'objet mobile sur la base de la relation de localisation relative dans un cas où l'obtention des informations obtient les informations liées à l'image capturée par la section de capture d'images (112), ou
une cinquième étape d'estimation consistant à calculer (i) une relation de localisation relative entre au moins un point de repère compris dans l'image capturée par la section de capture d'images (112) et l'objet mobile et (ii) une relation de localisation relative entre au moins un des émetteurs (106) qui ont délivré respectivement au moins un des signaux reçus par la section de réception (114) et l'objet mobile (110), et à estimer l'emplacement de l'objet mobile sur la base des relations de localisation relatives dans un cas où la section d'obtention d'informations (130) obtient les informations liées à l'image capturée par la section de capture d'images (112) et liées au signal reçu par la section de réception (114),
dans lequel
les informations liées à l'image comprennent des informations où des données de l'image sont associées à des données indiquant une orientation ou une position dans laquelle l'image a été capturée ;
la première étape d'estimation et la cinquième étape d'estimation comprennent : l'estimation d'un emplacement de l'objet mobile (110) sur la base d'un emplacement des au moins deux points de repère ou de l'au moins un point de repère dans l'image et de l'orientation ou de la position dans laquelle a été capturée l'image indiquée par les informations associées à l'image ; et
l'estimation de l'emplacement comprend : l'analyse de l'image capturée par la section de capture d'images et la reconnaissance des au moins deux points de repère ou de l'au moins un point de repère ou d'une partie du point de repère se trouvant dans un entourage de l'objet mobile (110) ; et
**caractérisé en ce que**
(i) dans un cas où le procédé de commande comprend la première étape d'estimation et où le nombre de points de repère reconnus dans la reconnaissance est inférieur à une valeur prédéterminée ou
(ii) dans un cas où le procédé de commande comprend la cinquième étape d'estimation et où le nombre de points de repère reconnus dans la reconnaissance est inférieur à une valeur prédéterminée,
la commande du déplacement comprend :
la consultation d'informations stockées dans une section de stockage d'historique de déplacement (460) configurée pour stocker des informations indiquant un historique de déplacement de l'objet mobile (110) et
la commande du déplacement de l'objet mobile (110) de sorte que l'objet mobile évolue dans une direction inverse d'une piste de l'objet mobile sur la base d'un historique de déplacement immédiatement précédent de l'objet mobile.
